# EUROPEAN PATENT SPECIFICATION

(11) **EP 1 150 229 B1**
(45) Date of publication and mention of the grant of the patent: **01.03.2006**
(21) Application number: 01106930.9
(22) Date of filing: 20.03.2001
(51) Int. Cl.: G06Q 50/00

(54) **System and method for providing output**
System und Verfahren zum Bereitstellen von Ausgabedaten
Système et méthode fournissant une sortie de données

(30) Priority: 21.03.2000 JP 2000083219; 21.03.2000 JP 2000083222; 21.03.2000 JP 2000083221
(43) Date of publication of application: 31.10.2001
(73) Proprietor: Brother Kogyo Kabushiki Kaisha, Nagoya-shi, Aichi-ken 467-8561 (JP)
(72) Inventor: Ito, Eiichi, Mizuho-ku, Nagoya-shi, Aichi-ken (JP); Takami, Hiroshi, Mizuho-ku, Nagoya-shi, Aichi-ken (JP); Katsuno, Teruyo, Mizuho-ku, Nagoya-shi, Aichi-ken (JP); Kobayashi, Shinji, Mizuho-ku, Nagoya-shi, Aichi-ken (JP); Sugiyama, Koji, Mizuho-ku, Nagoya-shi, Aichi-ken (JP); Asai, Naohito, Mizuho-ku, Nagoya-shi, Aichi-ken (JP); Fujikawa, Toshihide, Mizuho-ku, Nagoya-shi, Aichi-ken (JP)
(74) Representative: Prüfer, Lutz H.

## Description

### BACKGROUND OF THE INVENTION

### 1. Field of the Invention

The present invention relates to a system and method for providing a tangible output, such as a stamp and a name card, in response to a request from a customer.

### 2. Description of Related Art

In recent years, amusement facilities, such as a game arcade and an amusement park, are often provided with a name card producing device that produces a name card on which personal information including a customer's name and address is printed, a stamp producing device that produces a stamp by engraving an image on a stamp material based on personal information, and a sticker producing device that produces a peel-off sticker based on image data obtained by taking a picture of a customer's face. Such devices are increasingly popular because, in many of such devices, an original cartoon character of the amusement park or a commonly popular cartoon character can be printed or engraved together with the personal information, and because a name card and a stamp are provided in a short time and at low cost.

Under present circumstances, when a customer uses the above-described card or stamp producing device, the customer must go to a site where a desired device is installed and operate the device to enter data, or fill out a predetermined order form and submit it to an administrator of the device.

However, going to the installation site of a desired device is troublesome for the customer. In addition, it is relatively time-consuming to enter data into the desired device or fill out an order form. When many customers queue up for the desired device, they must wait for their own turn Thus, a drawback of such a device is that it takes a very long time to get a desired name card or the like. Another drawback of such a system is that when the customer fills out an order form, the device manager must take the trouble to enter data based on the items entered in the order form.

From EP 0 986 275 A1 an output providing system according to the preamble of claim 1 can be taken.

### SUMMARY OF THE INVENTION

Accordingly, it is an object of the invention to provide an output providing system and method that enables a customer to order a tangible output, such as a name card or a stamp, at less expense in time and trouble and that can also save an output provider time and trouble.

According to the invention, the time and trouble taken by a customer when ordering an output can be substantially saved. In addition, an output provider can produce an output based on the data transmitted from a customer. This will substantially save the output provider the trouble of entering data and also enable the output provider to receive massive orders from a great number of customers without any confusion. Furthermore, output-related data is generated and transmitted using a wireless data transmitter. Thus, a customer can order a stamp conveniently from various locations, at home and away from home, in his/her spare time.

To achieve the above-described object, an output providing system includes an electronic mail (hereinafter referred to as e-mail) receiver that can receive pieces of e-mail from customers, by wireless communication, each piece of e-mail containing data on a requested output along with customer information; an e-mail returning device that returns, upon receipt of each piece-of e-mail by the e-mail receiver, a piece of e-mail for acknowledging receipt of each request to each of the customers, based on the customer information; a data analyzer that analyzes contents of each piece of e-mail received by the e-mail receiver and converts the data on the requested output to image data to be outputted on an output medium; an output producing device that receives the image data and outputs an image on the output medium; and an e-mail transmitter that transmits a piece of e-mail for notifying each of the customers of completion of production of the requested output by the output producing device.

### BRIEF DESCRIPTION OF THE DRAWINGS

The invention will be described in detail with reference to preferred embodiments thereof and the accompanying drawings wherein:
FIG. 1 is a schematic diagram showing a configuration of a stamp providing system according to a first embodiment of the invention;
FIG. 2 is a general perspective view of a stamp producing device shown in FIG. 1;
FIG. 3 is a general cross-sectional view of the stamp producing device shown in FIG. 1;
FIG. 4 is a block diagram showing a control system of the stamp providing system according to the first embodiment of the invention;
FIG. 5 is a main flowchart showing stamp providing steps in the first embodiment of the invention;
FIG. 6 is a flowchart showing an e-mail editing process in FIG. 5 executed by a host computer;
FIG. 7 is a flowchart of an initialization subroutine in the e-mail editing process of FIG. 6;
FIG. 8 is a flowchart of a stamp type retrieving subroutine in the e-mail editing process of FIG. 6;
FIG. 9 is a flowchart of a name retrieving subroutine in the e-mail editing process of FIG. 6;
FIG. 10 is a flowchart of an address retrieving subroutine in the e-mail editing process of FIG. 6;
FIG. 11 is a flowchart of a buffer laying-out subroutine in the e-mail editing process of FIG. 6;
FIG. 12 shows an example of a brochure to be previously supplied to customers in the first embodiment of the invention;
FIG. 13 shows an example of transmission data displayed on a display of a cellular phone;
FIG. 14 shows a screen of an e-mail editing program displayed on a display of the host computer in the first embodiment;
FIG. 15 shows a difference, in name and address buffer layouts, between two types of stamp face designs;
FIG. 16 shows an example of a stamp face layout produced according to an embodiment of the invention;
FIG. 17 is an external perspective view of a stamp produced according to an embodiment of the invention;
FIG. 18 is a schematic diagram showing a configuration of a stamp providing system according to a second embodiment of the invention;
FIG. 19 is a schematic diagram showing a configuration of a stamp providing system according to a third embodiment of the invention;
FIG. 20 is a block diagram showing a control system of the stamp providing system according to the third embodiment of the invention;
FIG. 21 is a main flowchart showing stamp providing steps in the third embodiment of the invention;
FIG. 22 is a flowchart showing an e-mail transfer process in FIG. 21 executed by a host computer;
FIG. 23 is a flowchart showing an initialization subroutine in the e-mail transfer process of FIG. 22;
FIG. 24 is a flowchart showing a delivery point retrieving subroutine in the e-mail transfer process of FIG. 22;
FIG. 25 is a flowchart showing an e-mail transfer subroutine in the e-mail transfer process of FIG. 22;
FIG. 26 is a flowchart showing an e-mail editing process in FIG. 21 executed by an output terminal;
FIG. 27 is a flowchart of an initialization subroutine in the e-mail editing process of FIG. 26;
FIG. 28 is a flowchart of a stamp type retrieving subroutine in the e-mail editing process of FIG. 26;
FIG. 29 is a flowchart of a name retrieving subroutine in the e-mail editing process of FIG. 26;
FIG. 30 is a flowchart of an address retrieving subroutine in the e-mail editing process of FIG. 26;
FIG. 31 is a flowchart of a delivery point retrieving subroutine in the e-mail editing process of FIG. 26;
FIG. 32 is a flowchart of a buffer laying-out subroutine in the e-mail editing process of FIG. 26;
FIG. 33 shows a screen of an e-mail editing program displayed on a display of the host computer in the third embodiment;
FIG. 34 is a schematic diagram showing a configuration of a stamp providing system according to a fourth embodiment of the invention;
FIG. 35 is a block diagram showing a control system of the stamp providing system according to the fourth embodiment of the invention; and
FIG. 36 is a main flowchart showing stamp providing steps in the fourth embodiment of the invention.

### DETAILED DESCRIPTION OF THE PREFERRED EMBODIMENTS

Preferred embodiments of the invention will be described with reference to the accompanying drawings.

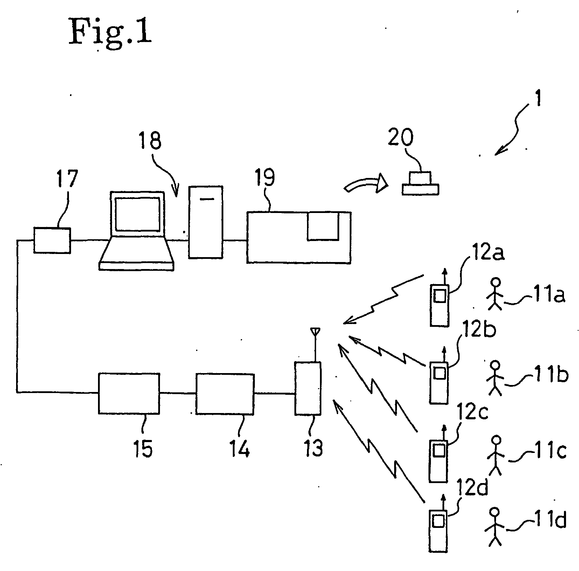

According to a first embodiment of the invention, a stamp providing system is provided which produces a stamp from a thermoplastic porous material in response to a request from a customer. Referring now to FIG. 1, a general configuration of the stamp providing system according to the first embodiment will be described. FIG. 1 is a schematic block diagram of the stamp providing system according to the first embodiment.

In the stamp providing system 1 shown in FIG. 1, a stamp producing device 19 located distant from a number of customers (only four customers 11a-11d are shown here by way of example) produces a stamp 20, based on stamp producing data transmitted over the air from cellular phones 12a-12d, which are portable wireless data receivers/transmitters owned by the respective customers 11a-11d. The cellular phones 12a-12d used in this embodiment have, aside from a function of receiving/transmitting voice by converting it to digital (or analog) signals, a function of receiving/transmitting textual information by converting it to code data from/to other computers and cellular phones (for example, a message receiving/transmitting function and an e-mail receiving/transmitting function using the Internet, which are provided by each cellular phone company).

Stamp producing data sent from the cellular phones 12a-12d is sent to a host computer 18 connected to the stamp producing device 19 in the form of e-mail. The text data contains, as will be described later, data to be engraved on a stamp material of the stamp 20. The e-mail containing textual information and sent from the cellular phones 12a-12d as digital signals is sent from a base station 13 of each cellular phone service company to a public line switching station 15, via a cellular phone switching station 14. The e-mail is converted into analog signals at any one of these stations and sent, via a public line, to a modem 17 connected to the host computer 18. Then the e-mail is coveted from analog to digital signals and is received by the host computer 18.

The host computer 18, as will be described in detail later, edits stamp face data for producing a stamp, based on the contents of the received e-mail. The edited data is sent to the stamp producing device 19. The stamp producing device 19 optically engraves an image on a stamp material based on the data sent from the host computer 18 and produces the stamp 20 having a desired stamp face.

In the first embodiment, the host computer 18 constitutes a data receiver, and the host computer 18 and the stamp producing device 19 constitute an output producing device.

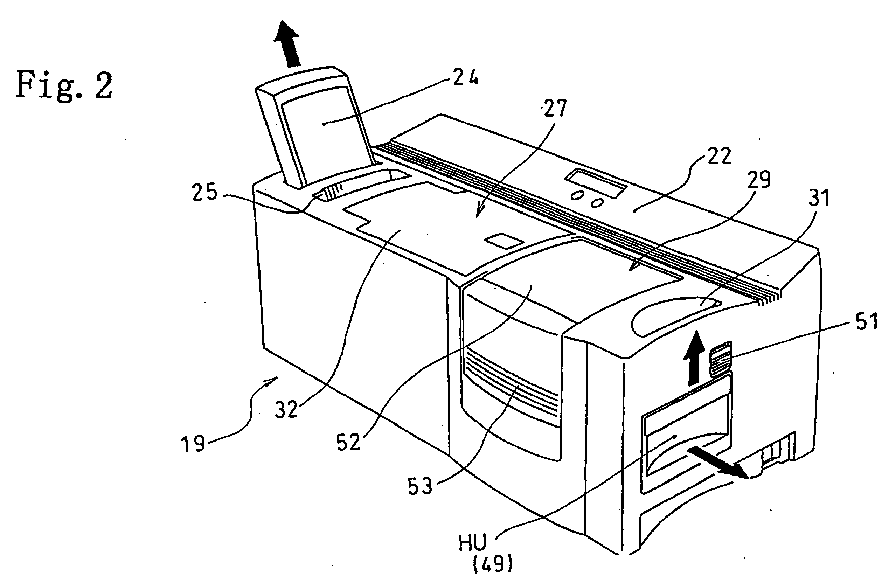

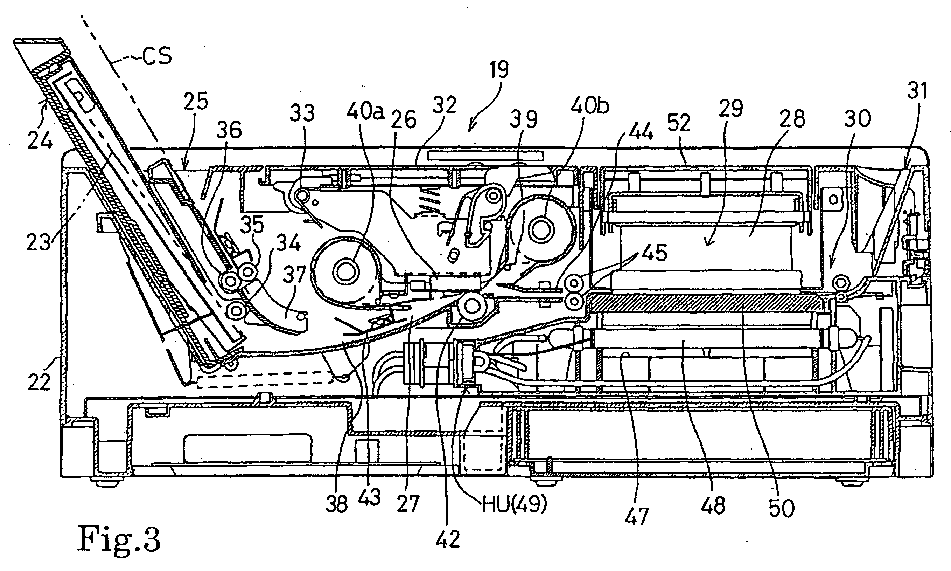

Referring now to FIGS. 2 and 3, the structure of the stamp producing device 19 will be described. FIG. 2 is a general perspective view of the stamp producing device 19 shown in FIG. 1, and FIG. 3 is a general cross-sectional view thereof. The stamp producing device 19 has a film magazine 24 removable from a devise body 22 and storing a plurality of transparent original films 23, a supply port 25 disposed near the film magazine 24 for supplying cut sheets CS for stamp ID labels, a print unit 27 provided with a printhead 26, a stamp unit 29 for forming a stamp face, based on a printed original film 23, on a stamp material (not shown) disposed at a lower surface of the stamp body 28, a stamp storage 30 for storing the stamp body 28 during stamp face forming, and a discharge port 31 disposed near the stamp unit 29 in the device body 2 for discharging the cut sheets CS and the original films 23.

A head holder unit 32, provided on an upper surface of the print unit 27, has at its lower side a thermal head 26 and is upwardly pivotable about a shaft 33, thereby allowing maintenance of the inside of the device. A leading edge of the uppermost original film 23 on the film magazine 24 is pressed into contact with a supply roller 34. When the supply roller 34 is rotated in this state, the original film 23 is properly fed to the print unit 27. The cut sheet CS is fed to a position printable by the thermal head 26 by a pair of feed rollers 35, 36 immediately behind the supply port 25, a sheet guide 37 provided immediately behind the supply port 25 so as to be bent toward the thermal head 26, and a guide rail 38.

The print unit 27 is provided with a supply roll 40 and a take-up roll 40b of thermal transfer ribbon 39 covered with wax base ink. A platen 42 is provided below the thermal head 26 disposed at the lower side of the head holder unit 32. Provided below the supply roll 40a are the guide rail 38 for guiding the original film 23 and the cut sheet CS to a space between the thermal head 26 and the platen 42, and a presser guide 43 for preventing the original film 23 and the cut sheet CS from floating while being fed. In addition, provided downstream of the thermal head 26 are a transport guide 44 and a pair of supply rollers 45.

A light-emitting unit (HU) 49 provided with a xenon tube 48 enclosed by a reflector box 47 is removably provided below the stamp unit 29. The light-emitting unit 49 with a stage 50 for holding thereon the stamp body 28 is removable from the stamp producing device 19 by upwardly sliding a slide lever 51. The stamp unit 29 is also provided with a top cover 52 and a front top cover 53, which are opened/closed for replacement of the stamp body 28.

The stamp producing device 19 is connected to the host computer 18 via a cable and executes, under the control of the host computer 18, various operations, such as printing a positive image on the original film 23, printing an ID label on the cut sheet CS, and engraving an image on a stamp material based on the original film 23 with a positive image printed thereon.

More specifically, the thermal head 26 prints a positive image composed of predetermined letters or the like on the original film 23, which has been fed from the film magazine 24 to the print unit 27, and the printed original film 23 is fed to the stamp unit 29. Then the light-emitting unit 49 irradiates the stamp material disposed under the stamp body 28 with light through the original film 23 to engrave the image on the stamp material. In this way, a series of stamp producing operations by the stamp producing device 19 is completed.

For printing on the cut sheet CS, a positive image including letters and graphics is printed by the thermal head 26 on the cut sheet CS fed from the supply port 25, instead of the original film 23, and the printed cut sheet CS is discharged from the discharge port 31. The cut sheet CS may be pasted to the stamp body 28 as an ID label.

The structure of a stamp material disposed under the stamp body 28 will now be described. The stamp material used in this embodiment has a double-layer structure, as disclosed in Japanese Laid-Open Patent Publication No. 11-78191, which belongs to the applicant of the present invention. The lower layer is made of a soft porous resin (such as urethane resin) in which a light energy-absorbing material, such as carbon black, is dispersed. The upper layer is made of a hard porous resin (such as polyvinyl formal) in which ink is stored and to which a uniform pressure is applied.

Upon selective irradiation of such a stamp material, when it is compressed, with light via the transparent original film with a positive image printed thereon, a portion in the lower layer, which corresponds to a transparent portion of the original film, is melted by heat generated from the light energy-absorbing material and then hardened and sealed as an ink unpermeable portion. On the other hand, a portion in the lower layer corresponding to a portion of the original film where letters or the like are printed is not irradiated with light nor melted/hardened by heat transmitted from the printed portion, and remains unsealed. As a result, a stamp having, on the lower surface of the stamp material, a desired pattern composed of a sealed portion (not to be printed) and an unsealed portion (to be printed) is formed.

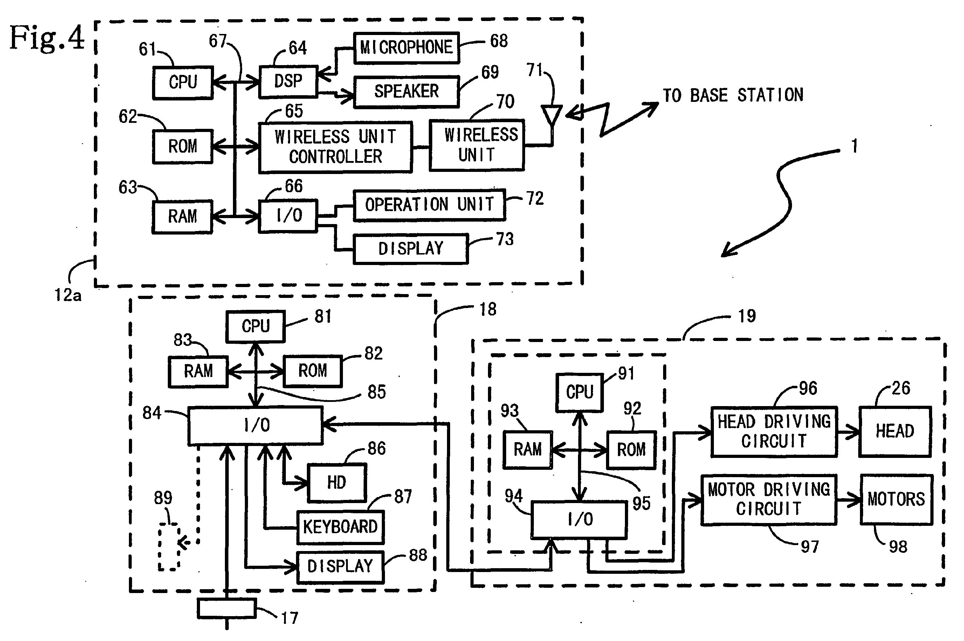

Referring now to FIG. 4, a control system of the stamp providing system 1 according to the first embodiment will be described. FIG. 4 is a block diagram showing a control system of the stamp providing system 1. In FIG. 4, only one (cellular phone 12a) of a number of cellular phones usable in the stamp providing system in this embodiment is representatively shown, and connection between the cellular phone 12a and the host computer 18 is omitted from the figure.

As shown in FIG. 4, the cellular phone 12a has a CPU 61, a ROM 62, a RAM 63, a DSP (digital signal processor) 64, a wireless unit controller 65, and an I/O interface 66. These devices are connected to each other using a bus 67. The ROM 62 is a rewritable nonvolatile solid-state memory, such as a flash memory, for storing a cellular phone operation program, a kana-kanji conversion program, and other programs. The RAM 63 is a volatile solid-state memory for storing text data created by an operator of the cellular phone 12a.

The DSP 64 is a voice processor connected to a microphone 68 and a speaker 69 via an A/D and D/A converters (not shown). The wireless unit controller 65 controls operation of a wireless unit 70 connected thereto, based on signals from the CPU 61. The wireless unit 70 transmits over the air desired voice data and text data, as digital signals, to a base station via an antenna 71. Conversely, the wireless unit 70 is also used for receiving data transmitted from the base station via the antenna 71.

Connected to the I/O interface 66 are an operation unit 72 including numeral keys and a call key, and a display 73 on which numerals and letters inputted from the operation unit 72 or received by the wireless unit 70 are displayed. By operating the operation unit 72, the operator of the cellular phone 12a can create an arbitrary letter string including kana (Japanese syllabary), kanji (Chinese character), numerals, and symbols. Then data of the created letter string as well as an identifier used for identifying an individual cellular phone (for example, a phone number of the cellular phone 12) is transmitted to the host computer 18 via the base station 13.

The host computer 18 has a CPU 81, a ROM 82, a RAM 83 and an I/O interface 84. These devises are connected to each other using a bus 85. Connected to the I/O interface 84 are a hard disk 86, a keyboard 87, a display 88, and a modem 17.

The display 88 displays a screen for editing e-mail received from one or more cellular phones, a stamp face generating screen including a stamp face image to be engraved by the stamp producing device 19, and other screens. The keyboard 87 is connected as part of an input device and, other than the keyboard 87, a pointing device such as a mouse may be connected.

The hard disk 86 magnetically stores an e-mail editing program for editing e-mail received from the cellular phones, a program for exchanging data with the stamp producing device 19, and other programs. The RAM 83 temporarily stores programs read from the hard disk 86, received e-mail, and data entered from the keyboard 87. The RAM 83, as will be described later, is provided with name buffers 0-2, address buffers 0-2, a stamp type buffer, and a memory area for various pointers.

The stamp producing device 19 is provided with a CPU 91, a ROM 92, a RAM 93, and an I/O interface 94. These devices are connected to each other using a bus 95. The I/O interface 94 is connected to the I/O interface 84 of the host computer 18 via a cable or the like. This allows the stamp producing device 19 to retrieve stamp face data edited according to this embodiment from the host computer 18. Also connected to the I/O interface 94. are a head driving circuit 96 and a motor driving circuit 97. A thermal head 26 is connected to the head driving circuit 96, while motors 98 variously located at the stamp producing device 19 for driving the thermal head 26 and various rollers are connected to the motor driving circuit 97.

The ROM 92 stores a control program for controlling the entire operation of the stamp producing device 19. The RAM 93 stores stamp producing data provided from the host computer 18. The RAM 93 is provided with an image buffer for storing dot matrix data generated based on the stamp producing data.

The CPU 91 controls the head driving circuit 96 and the motor driving circuit 97, based on the control program stored in the ROM 92 and the dot matrix data stored in the image buffer of the RAM 93. Thereby, a desired stamp face image is printed by the thermal head 26 on the original film 23 or the cut sheet CS, and the original film 23 is used for engraving the face image on a stamp material.

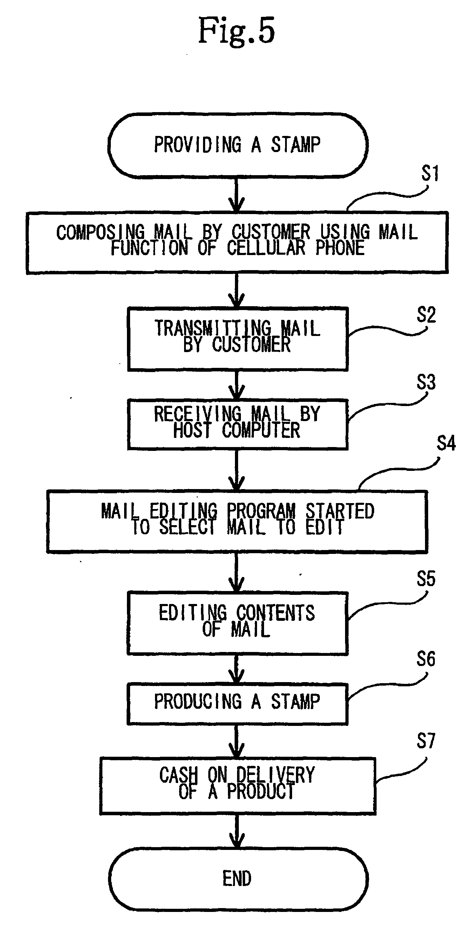

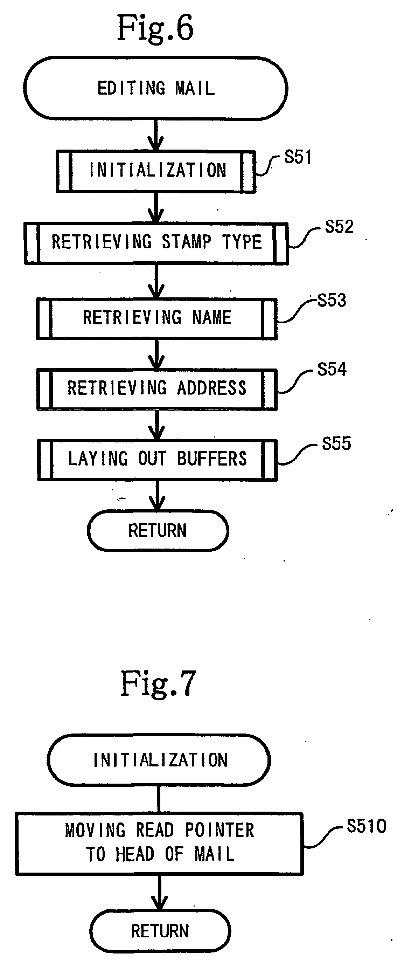

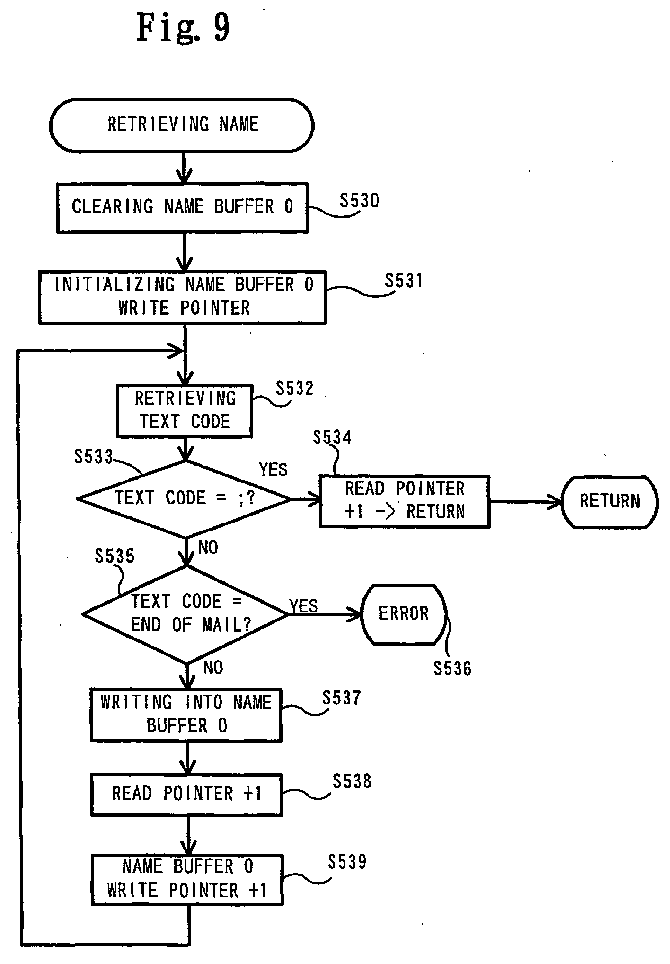

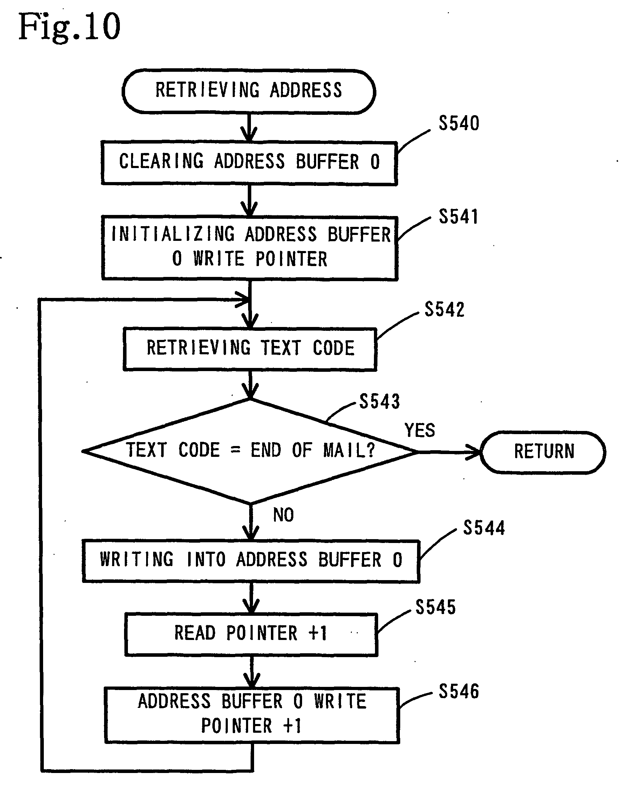

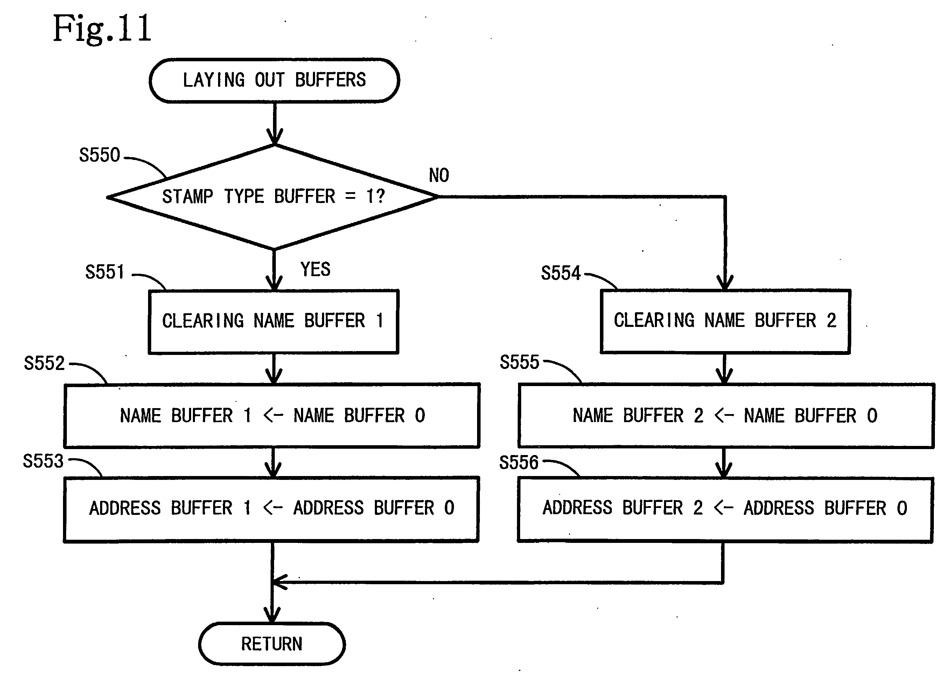

Referring now to FIGS. 5 through 17, stamp providing steps in the stamp providing system 1 according to the first embodiment will be described. FIG. 5 is a main flowchart showing stamp providing steps according to the first embodiment. FIG. 6 is a flowchart showing an e-mail editing process in the host computer 18. FIG. 7 is a flowchart showing a stamp type retrieving subroutine in the e-mail editing process of FIG. 6. FIG. 9 is a flowchart showing a name retrieving subroutine in the e-mail editing process of FIG. 6. FIG. 10 is a flowchart showing an address retrieving subroutine in the e-mail editing process of FIG. 6. FIG. 11 is a flowchart showing a buffer laying-out subroutine in the e-mail editing process of FIG. 6.

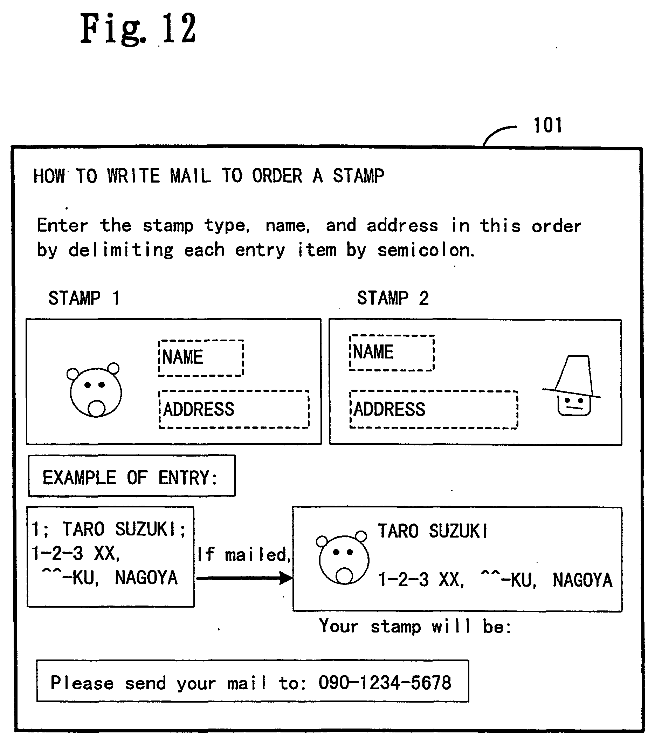

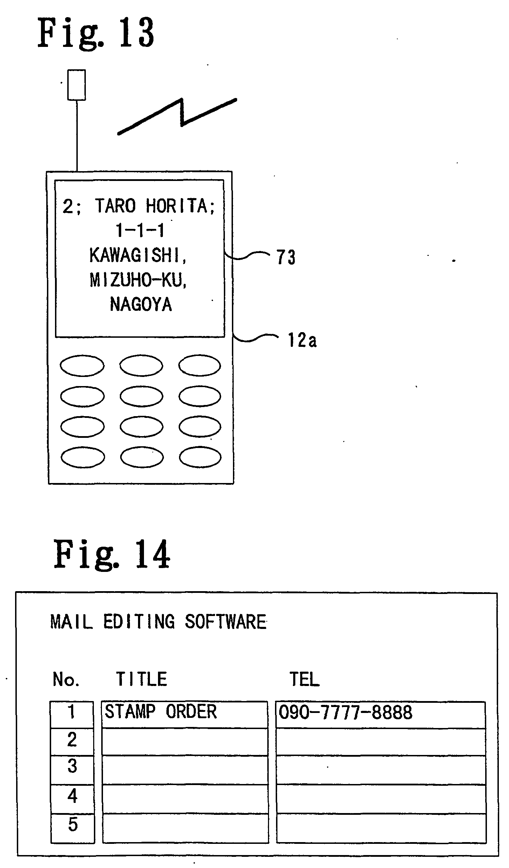

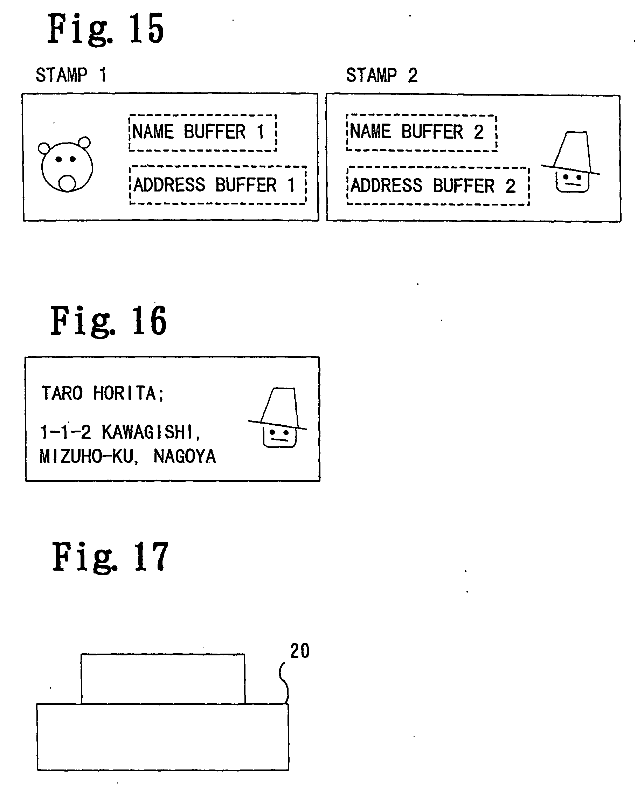

Fig. 12 shows an example of a brochure to be supplied previously to customers in this embodiment. FIG. 13 shows an example of transmission data displayed on the display of the cellular phone. FIG. 14 shows a screen of the e-mail editing program displayed on the display of the host computer 18. FIG. 15 shows a difference, in name and address buffer layouts, between the two types of stamp face designs. FIG. 16 shows an example of a stamp face layout produced according to this embodiment. FIG. 17 is an external perspective view of a stamp produced according to this embodiment.

First, in step S1 (FIG. 5), customers 11a-11d operate the operation unit 72 of their respective cellular phones 12a-12d to compose e-mail containing text data for a desired stamp to be produced. The e-mail needs to be composed by following a predetermined rule to facilitate editing by the host computer 18. The rule may be to enter a plurality of entry items by delimiting each entry item by a predetermined symbol (for example, a semicolon (;)). It is preferable to previously supply the brochure 101, as shown in FIG. 2, to customers to notify them of such an e-mail composing rule.

In this embodiment, two entry items, for example, a name and an address (of either a customer who operates a cellular phone or another person) are provided, and these two entry items are engraved based on a design selected by the customer from two types of designs featuring different cartoon characters. Accordingly, the e-mail composed in this embodiment contains three entry items, namely, the stamp type, entry item 1 (for example, a name), and entry item 2 (for example, an address).

Accordingly, in the brochure 101 shown in FIG. 12, the e-mail composing rule, two types of stamp face designs, an exemplary entry of e-mail, a stamp face sample produced based on the e-mail, and a telephone number (or e-mail address) of an e-mail recipient are printed. The contents of the composed e-mail are stored in the RAM 63 as code data and displayed, as shown in FIG. 13, on the display 73 of the cellular phone 12a.

Then in step S2, the customer 11a presses an e-mail transmission button of the cellular phone 12a to transmit the e-mail composed in step S1 to the host computer 18. At this time, the cellular phones 12a-12d must be located within a service area covered by the cellular phone service company. During composition of e-mail in step S1, however, a cellular phones is not necessarily required to be located within the service area, and a customer, if having a cellular phone, can compose e-mail for ordering a stamp at anytime and anywhere.

Then in step S3, the host computer 18 receives the e-mail transmitted from the cellular phones 12a-12d. The received e-mail is stored in the RAM 83 of the host computer 18. Each piece of e-mail received by the host computer 18 preferably includes, in its header, data representing the e-mail sender's cellular phone number, other than text data representing the stamp type, name, and address entered in step S1. The host computer 18, if provided with the cellular phone number of an e-mail sender, is enabled to perform mail management using the cellular phone number unique to each customer and proceed with the subsequent processes smoothly. Also, this prevents a wrong stamp from being delivered later to a customer. Customer identifying information such as the cellular phone number may be entered in step S1 by the customer. The customer identifying information may be an e-mail address or a previously registered ID number, instead of the cellular phone number.

In step S3, e-mail for acknowledging receipt of e-mail or for notifying of the time of completion of a stamp estimated from the stamp order situations may be returned to the respective cellular phones 12a-12d of the customers 11a-11d. This obviates the need for the customers 11a-11d to wait for the stamp 20 at a delivery place.

Then in step S4, the e-mail editing program installed in the host computer 18 is started to select an piece of e-mail to be edited from a list of pieces of e-mail received by the host computer 18 (FIG. 14).

Then in step S5, the piece of e-mail selected in step S4 is processed using the e-mail editing program as described below. The e-mail editing process, as shown in FIG. 6, includes five steps, namely, initialization (step S51), retrieval of stamp type (step S52), retrieval of name (step S53), retrieval of address (step S54), and buffer layout (step S55). These steps will be described with reference to FIGS. 7 through 11.

In the initialization step (step S51), as shown in step S510 of FIG. 7, a read pointer stored in the RAM 83 of the host computer 18 for indicating an e-mail read point is moved to the head of the piece of e-mail to be edited.

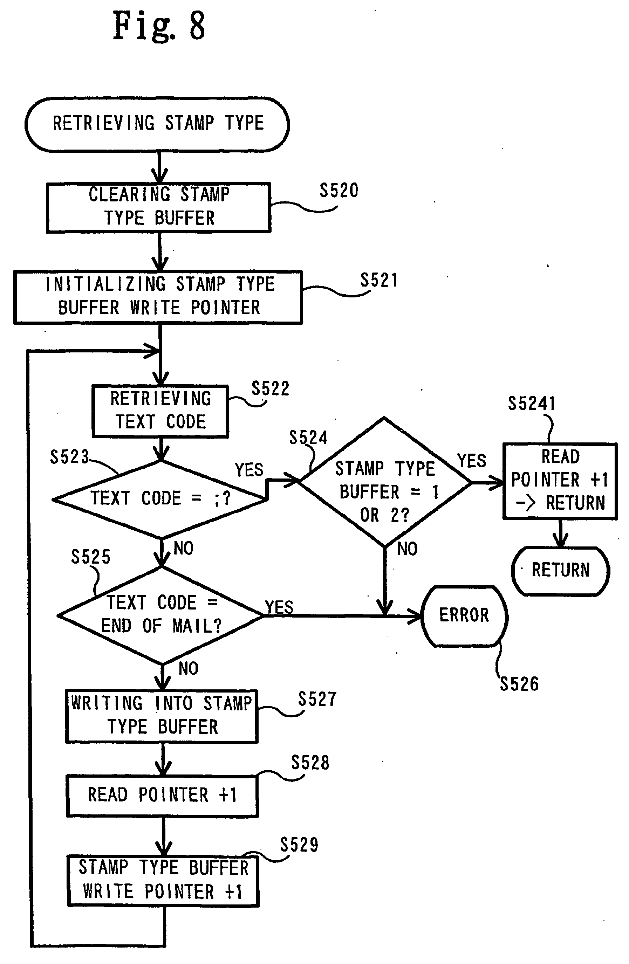

In the stamp type retrieving step (step S52), the contents of the stamp type buffer in the RAM 83 are cleared in step S520, as shown in FIG. 8. Then in step S521, a stamp type buffer write pointer for indicating a data write point in the stamp type buffer is initialized. Then in step S522, a text code included in code data and located at a point indicated by the read pointer is retrieved from the body of the piece of e-mail. Then it is determined, in step 523, whether the text code is indicative of a delimiting symbol (for example, a semicolon (;)) for an entry item.

When the text code is determined to be indicative of a delimiting symbol (S523: YES), control goes to step S524 on the assumption that the stamp type data has already been retrieved. In step S524, it is determined whether the data retrieved and stored in the stamp type buffer represents the stamp type ("1" or "2" in this embodiment). As a result, when the data stored in the stamp type buffer is determined to represent the stamp type (S524: YES), control goes to step S5241 on the assumption that the data representing the stamp type has been correctly retrieved, and the read pointer is incremented by one and this subroutine is completed. When the data stored in the stamp type buffer is determined not to represent the stamp type (S524: NO), control goes to step S526, where error handling is performed.

On the other hand, when the text code is determined not to be a delimiting symbol (S523: NO), control goes to step S525 on the assumption that the stamp type has not yet been retrieved. In step S525, it is determined whether the text code retrieved in step 5522 is a code suffixed on and indicative of the end of the body of the piece of e-mail (or whether retrieval of a text code was failed in step S522). When the text code is determined to be a code indicative of the end of the body of the piece of e-mail (S525: YES), control goes to step S526, where error handling is performed.

When the text code is determined not to be a code indicative of the end of the body of the piece of e-mail, (S525: NO), the text code retrieved in step S522 is written into the stamp type buffer. Then in the step S528, the read pointer is incremented by one and, in step S529, the stamp type buffer write pointer is incremented by one. After that, control returns to step S522. By repeating these steps, the text code representing the stamp type ("1" or "2" in this embodiment) is written into the stamp type buffer in the RAM 83 of the host computer 18.

In the name retrieving step (step S53), the contents of the name buffer 0 in the RAM 83 are cleared in step S530, as shown in FIG. 9. Then in step S531, a name buffer 0 write pointer for indicating a data write point in the name buffer 0 is initialized. Then in step S532, a text code included in the code data and located at a point indicated by the read pointer is retrieved from the body of the piece of e-mail. Then it is determined, in step 533, whether the text code is indicative of a delimiting symbol (for example, a semicolon (;)) for an entry item.

When the text code is determined to be indicative of a delimiting symbol (S533: YES), control goes to step S534 on the assumption that the name data has already been retrieved. In step S534, the read pointer is incremented by one and this subroutine is completed. On the other hand, when the text code is determined not to be indicative of a delimiting symbol (S533: NO), control goes to step S535 on the assumption that the name data has not yet been retrieved. In step S535, it is determined whether the text code retrieved in step S532 is a code suffixed on and indicative of the body of the piece of e-mail (or whether retrieval of a text code was failed in step S532). When the text code is determined to be a code indicative of the end of the body of the piece of e-mail (S535: YES), control goes to step 5536, where error handling is performed.

When the text code is determined not to be a code indicative of the end of the body of the piece of e-mail (S535: NO), the text code retrieved in step S532 is written into the name buffer 0 in step S537. Then in the step S538, the read pointer is incremented by one and, in step S539, the name buffer 0 write pointer is incremented by one. After that, control returns to step S532. By repeating these steps, text data representing the name desired by the customer to be engraved is written into the name buffer 0 in the RAM 83 of the host computer 18.

In the address retrieving step (step S54), the contents of the address buffer 0 in the RAM 83 are cleared in step S540, as shown in FIG. 10. Then in step S541, an address buffer 0 write pointer for indicating a data write point in the address buffer 0 is initialized. Then in step S542, a text code at a point indicated by the read pointer is retrieved from the body of the piece of e-mail. Then it is determined, in step 534, whether the text code is a code suffixed on and indicative of the end of the body of the piece of e-mail (or whether retrieval of a text code was failed in step S542). When the text code is determined to be a code indicative of the end of the body of the piece of e-mail (S543: YES), this subroutine is completed on the assumption that the address data has already been retrieved.

When the text code is determined not to be a code indicative of the end of the body of the piece of e-mail (S543: NO), the text code retrieved in step S542 is written into the address buffer 0. Then in the step S544, the read printer is incremented by one and, in step S546, the address buffer 0 write pointer is incremented by one. After that, control returns to step S542. By repeating these steps, text data representing the address desired by the customer to be engraved is written into the address buffer 0 in the RAM 83 of the host computer 18.

Then in the buffer laying-out step (step S55), it is determined whether "1" or "2" is written in the stamp type buffer in the RAM 83 of the host computer 18. When the stamp type is determined to be "1" (S550: YES), the name buffer 1 and the address buffer 1 in the RAM 83 are cleared in step S551, and then the contents of the name buffer 0 are written into the name buffer 1 in step S552, and the contents of the address buffer 0 is written into the address buffer 1 in step S553. On the other hand, when the stamp type is determined to be "2" (S550: NO), the name buffer 2 and the address buffer 2 in the RAM 83 are cleared in step S554, and then the contents of the name buffer 0 are written into the name buffer 2 in step S555, and the contents of the address buffer 0 are written into the address buffer 2 in step S556. In this way, the buffers are laid out and the e-mail editing step is completed.

Two name buffers and two address buffers are used because, in this embodiment, the name and address engraving positions within the stamp face area are different, as shown in FIG. 15, depending on whether the stamp type is "1" or "2". When the stamp type is "1", a cartoon character is engraved near the left end of the stamp face area and the name and the address must be disposed away a certain distance from the left end. On the other hand, when the stamp type is "2", a cartoon character is engraved near the right end of the stamp face area and the name and the address must be disposed away a certain distance from the right end.

Then control goes back to step S6 of FIG. 5, where the data edited in step S5 is supplied to the stamp producing device 19. More specifically, the contents of the stamp type buffer, the contents of the name buffer 1 or 2, whichever is updated more recently, and the contents of the address buffer 1 or 2, whichever is updated more recently are transmitted to the stamp producing device 19 as the stamp producing data.

The stamp producing device 19, in turn, receives the stamp producing data from the host computer 18 and stores it in the RAM 93. The CPU 91 generates dot matrix data for engraving the stamp face by referring to font data of letters and data of a cartoon character stored in the ROM 92, based on the stamp producing data stored in the RAM 93. Then the CPU 91 stores the generated dot matrix data in the image buffer in the RAM 93. Then the stamp 20 (FIG. 17) having a desired, engraved stamp face as shown in FIG. 16 is produced by the thermal head 26 and the motors 98 driven based on the dot matrix data.

Then in step S7, the stamp 20 is provided to the customer cash on delivery. In this case, it is preferable that the customer's cellular phone number is checked to avoid the mismatch between the stamp ordered from the customer and the stamp to be delivered. It is more preferable that the stamp providing system 1 in this embodiment is provided with an automatic delivery device of produced stamps. An automatic delivery device ejects, in response to payment by the customer of a prescribed stamp fee and an entry of the customer's cellular phone number, a stamp associated with the entered phone number. Use of such a device can prevent a shop attendant from delivering a wrong stamp to the customer due to a mistake in checking the phone number. The customer may go to the installation site of the stamp producing device 19 to get the stamp 20, or may get, at home, the stamp 20 sent by mail or courier.

As described above, according to the first embodiment, when the customers 11a-11d want to order the stamp 20 having a desired stamp face, all they have to do is to send desired data using the cellular phones 12a-12d, instead of taking the trouble to go to the installation site of the stamp producing device 19 and enter data to be engraved in the stamp or fill out an order form. Accordingly, the time and trouble taken by the customers 11a-11d to order the stamp 20 can be substantially saved. Also, automatic production of stamps based on the data transmitted from the customers 11a-11d substantially saves the stamp provider the trouble of entering the data filled in the order form and enables the stamp provider to receive orders from distant customers.

Also, in this embodiment, because stamp producing data is generated and transmitted using the cellular phones 12a-12d, the customers 11a-11d can order a stamp conveniently from various locations, at home and away from home, in their spare time.

Also, in this embodiment, because a plurality of cellular phones 12a-12d can be identified using the phone numbers assigned thereto, a sender's cellular phone can be easily identified from the data received. Additionally, stamps can be produced based on personal information, such as the name and the address of the customers 11a-11d.

Although, in this embodiment, the stamp type together with the name and the address are sent by e-mail to the host computer 18, only the name and the address may be sent by e-mail to the host computer 18 and then the stamp type may be designated later when a customer goes to the site where stamp designs are shown. Such a method is effective when stamp design samples cannot be printed previously in the brochure 101 in FIG. 12 due to frequent stamp design changes. Previous transmission of all the data necessary for producing a stamp from a cellular phone, as shown in the embodiment, allows a customer to get a stamp with less trouble and waiting time.

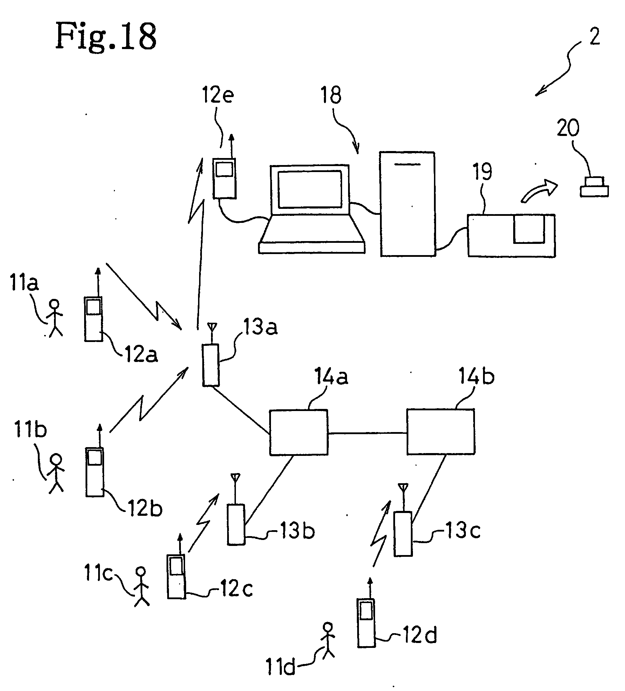

A stamp providing system according to a second embodiment of the invention will now be described with reference to FIG. 18, which is a schematic diagram showing a configuration thereof. In this embodiment, a cellular phone connected to a host computer is used as a data receiver and eliminates the use of a public line and a modem, which are used in the first embodiment. In a stamp providing system 2 shown in FIG. 18, a stamp 20 is produced from a thermoplastic porous material by a stamp producing device 19 located distant from a number of customers (only four customers 11a-11d are shown here by way of example), based on stamp producing data transmitted over the air from their respective cellular phones 12a-12d.

Text data on a stamp desired to be produced is sent from the cellular phones 12a-12d in the form of e-mail to a cellular phone 12e connected to the host computer 18. More specifically, text data sent over the air from the cellular phones 12a, 12b is sent from a base station 13a of each cellular phone service company to the cellular phone 12e located within a territory of the base station 13a. Text data sent over the air from the cellular phone 12c is sent from a base station 13b, via a cellular phone switching station 14a and the base station 13a, to the cellular phone 12e. Text data sent over the air from the cellular phone 12d is sent from a base station 13c, via a cellular phone switching station 14b, another cellular phone switching station 14a, and the base station 13a, to the cellular phone 12e (in this embodiment, a cellular phone connection adapter 89, instead of the modem 17, may be connected to the I/O interface 84, as shown in FIG. 4).

The e-mail received by the cellular phone 12e is stored in its RAM 63 and retrieved into the host computer 18 using an e-mail retrieving program stored in the cellular phone 12e. Then the e-mail is stored in a RAM 83. After that, the stamp 20 is produced according to the same steps as in the first embodiment and provided to a customer.

Using a wireless receiver (preferably a cellular phone) as the data receiver, as shown in this embodiment, allows the host computer 18 and the stamp producing device 19 to be installed in locations, within the cellular phone service area, where connection with a public line is hardly established. Accordingly, the installation sites of the host computer 18 and the stamp producing device 19 can be selected more freely and the environment for the host computer 18 to receive data can be built at a lower cost.

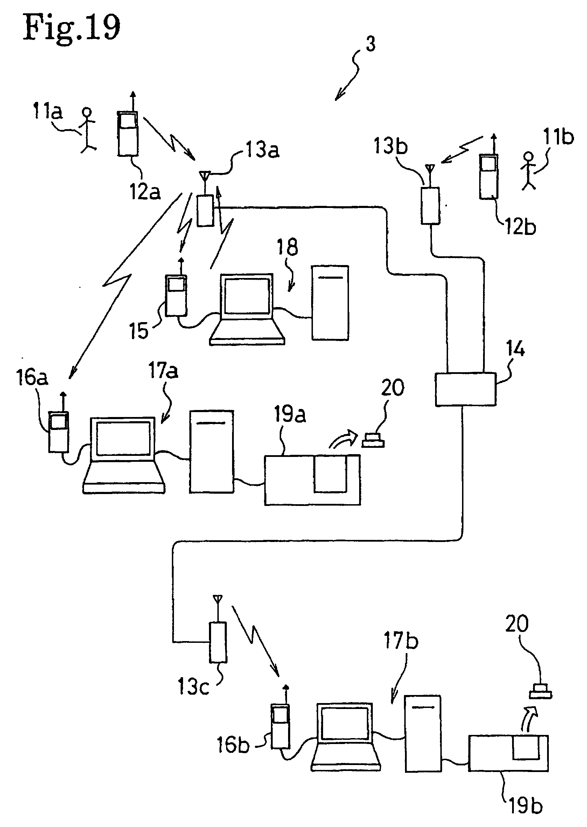

A stamp providing system according to a third embodiment of the invention will now be described with reference to FIG. 19, which is a schematic block diagram showing a configuration thereof. In the third embodiment, as shown in FIG. 19, a stamp producing device 19a or 19b, located close to and/or distant from a number of customers (only two customers 11a, 11b are shown here by way of example), produces a stamp 20, based on stamp producing data transmitted over the air from cellular phones 12a, 12b, which are portable wireless data receivers/transmitters owned by the respective customers 11a, 11b.

Stamp producing data sent from the cellular phones 12a, 12b is sent to a host computer 18 in the form of e-mail. As will be described later, the text data contains data to be engraved on a stamp material of the stamp 20 as well as stamp production site designating data. When e-mail is transmitted over the air as digital signals from the cellular phone 12a, which is located within a territory of a base station 13a shared by the host computer 18, the e-mail is received, via the base station 13a, by the cellular phone 15 connected to the host computer 18. On the other hand, when the e-mail is transmitted over the air as digital signals from the cellular phone 12b, which is located within a territory of a base station 13b not shared by the host computer 18, the e-mail is received by the cellular phone 15 via the base station 13b, a cellular phone switching station 14, and the base station 13a.

The host computer 18, as will be described in detail later, transfers the received e-mail by the cellular phone 15, based on the contents thereof, to one of a plurality of cellular phones (only two cellular phones 16a, 16b are shown in this embodiment by way of example). Stamp producing devices 19a, 19b are connected to the cellular phones 16a, 16b, via output terminals 17a, 17b, respectively. The output terminals 17a, 17b, as will be described in detail later, edit stamp face data based on the contents of the received e-mail. The edited data is sent to the stamp producing device 19a or 19b. The stamp producing device 19a or 19b, as described below, optically engraves an image on a stamp material based on the data sent from the output terminal 17a or 17b and produces the stamp 20 having a desired stamp face.

In the third embodiment, the cellular phones 16a, 16b constitute data receivers, and the output terminals 17a, 17b and the stamp producing devices 19a, 19b constitute output producing devices.

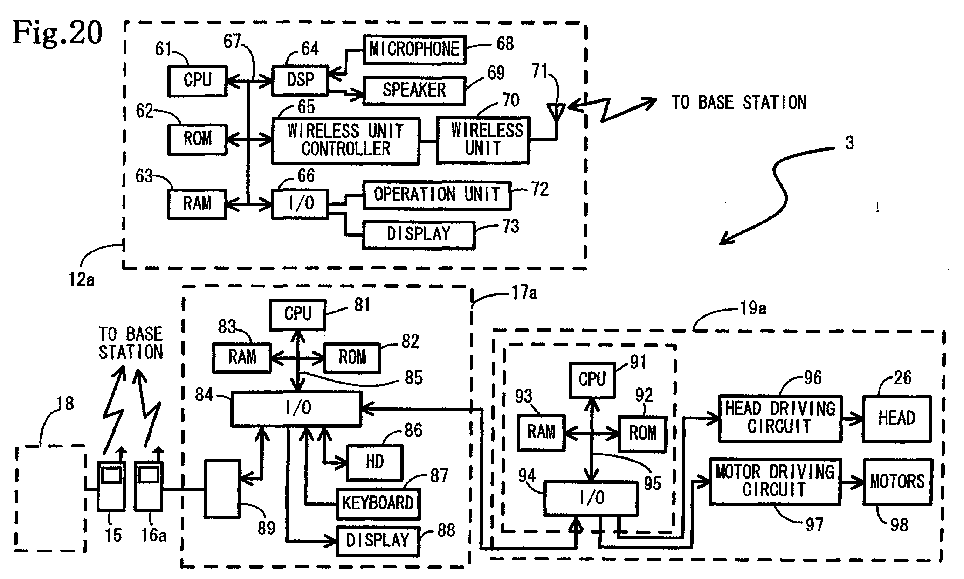

Referring now to FIG. 20, a control system of the stamp providing system 3 according to the third embodiment will be described. FIG. 20 is a block diagram showing a control system of the stamp providing system 3. In FIG. 20, only each one (cellular phone 12a, output terminal 17a, and stamp producing device 19a) of a number of cellular phones, output terminals, and stamp producing devices usable in the stamp providing system 3 according to this embodiment is representatively shown. Base stations and switching stations are omitted from the figure. Elements structurally similar to those in the first embodiment have the same reference numbers and a detailed description thereof will be omitted.

The constituents of each part in the third embodiment are similar to those in the first embodiment. As shown in FIG. 20, the cellular phone 12a has a CPU 61, a ROM 62, a RAM 63, a DSP (digital signal processor) 64, a wireless unit controller 65, and an I/O interface 66, and these devices are connected to each other using a bus 67.

The output terminal 17a has a CPU 81, a ROM 82, a RAM 83 and an I/O interface 84, and these devises are connected to each other using a bus 85. Connected to the I/O interface 84 are a hard disk 86, a keyboard 87, a display 88, and a cellular phone connection adapter 89. The cellular phone 16a is connected to the cellular phone connection adapter 89 so as to enable data reception/transmission by/from the output terminal 17a via the base station 13a.

The hard disk 86 magnetically stores a program for loading e-mail from the cellular phone 16a and a program for editing e-mail received and loaded from the cellular phone 16a, a program for exchanging data with the stamp producing device 19a, and other programs. The RAM 83 temporarily stores programs read from the hard disk 86, received e-mail, and data entered from the keyboard 87. The RAM 83, as will be described later, is provided with name buffers 0-2, address buffers 0-2, a stamp type buffer, a delivery point buffer, and a memory area for various pointers.

Because the hardware configuration of the host computer 18 to which the cellular phone 15 is connected is substantially the same as that of the above-described output terminal 17a, a detailed description thereof is omitted here. The host computer 18 stores, in addition to an e-mail loading program, a program for unloading e-mail to the cellular phone 15 for e-mail transmission therefrom, and also stores, as will be described later, an e-mail transfer program, instead of the e-mail editing program.

The stamp producing device 19a is provided with a CPU 91, a ROM 92, a RAM 93, and an I/O interface 94, and these devices are connected to each other using a bus 95. The I/O interface 94 is connected to the I/O interface 84 of the output terminal 17a via a cable or the like. This allows the stamp producing device 19a to retrieve stamp face data edited according to this embodiment from the output terminal 17a.

The ROM 92 stores a control program for controlling the entire operation of the stamp producing device 19a. The RAM 93 stores stamp producing data provided from the output terminal 17a. The RAM 93 is provided with an image buffer for storing dot matrix data generated based on the stamp producing data.

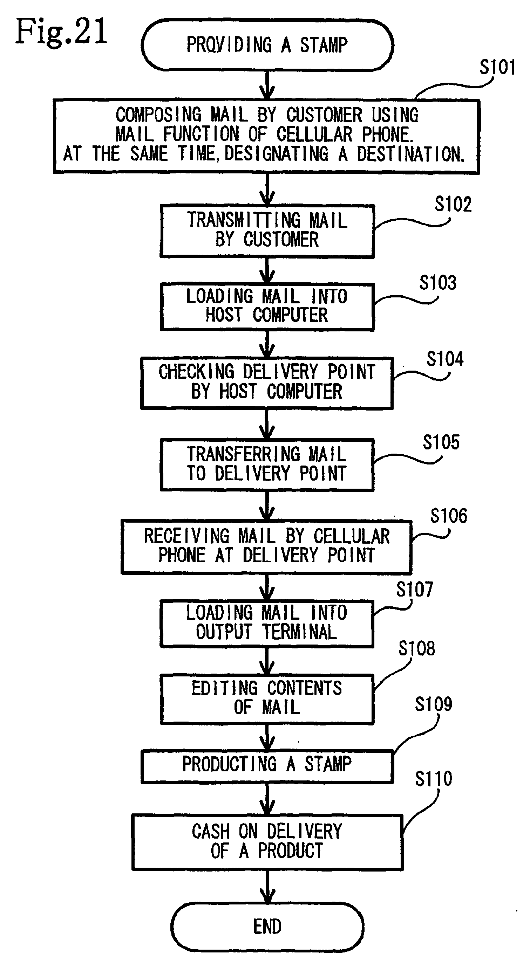

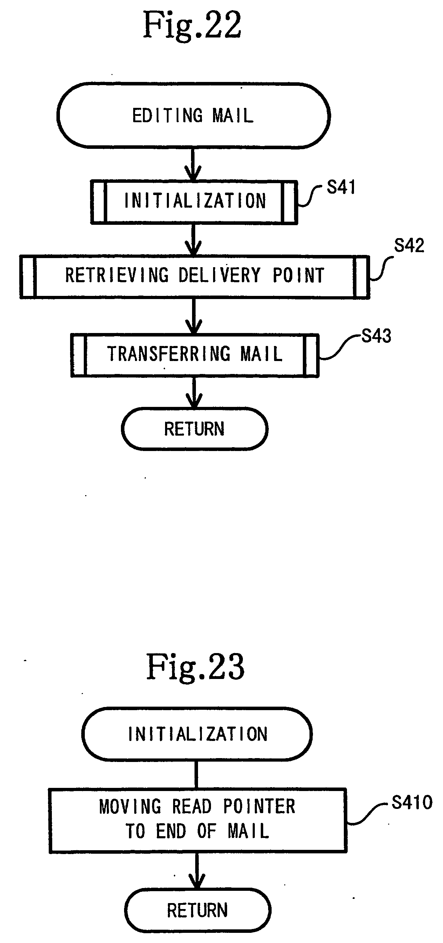

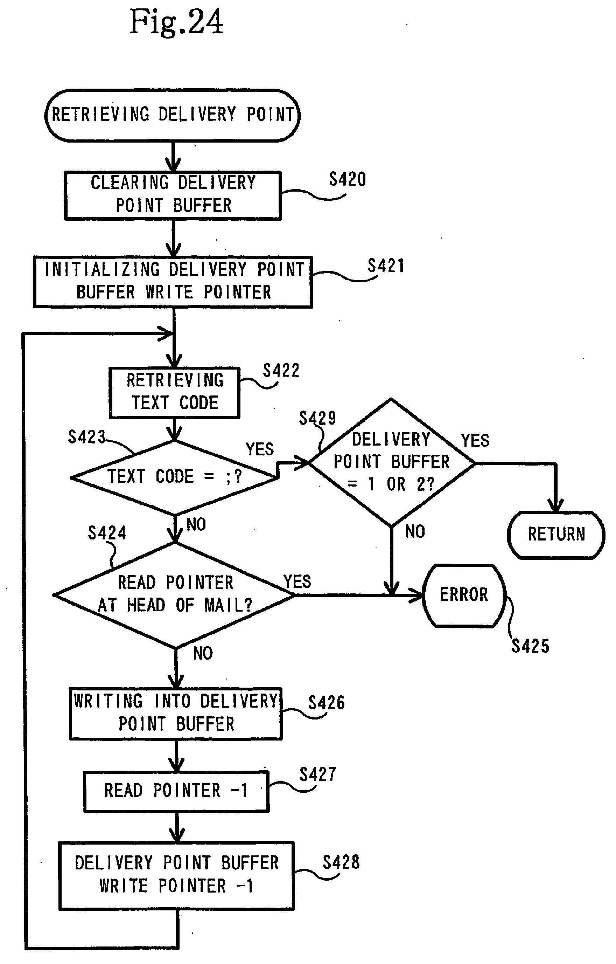

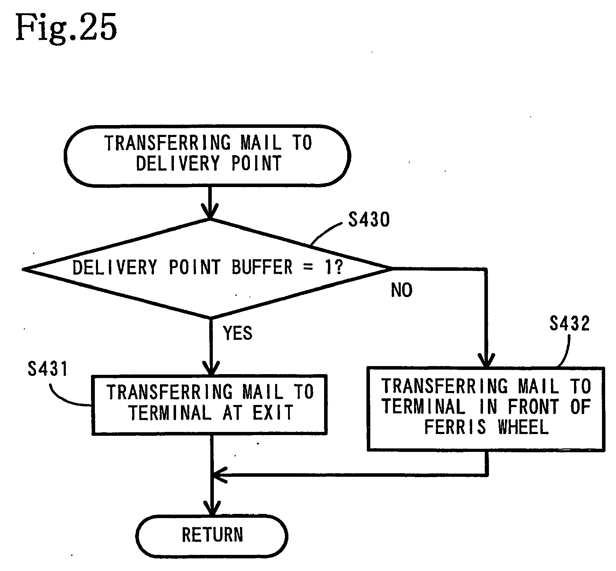

Referring now to FIGS. 21 through 32, stamp providing steps in the stamp providing system 3 according to the third embodiment will be described. FIG. 21 is a main flowchart showing a stamp providing steps according to the third embodiment. FIG. 22 is a flowchart showing an e-mail transfer process in the host computer 18. FIG. 23 is a flowchart showing an initialization subroutine in the e-mail transfer process of FIG. 22. FIG. 24 is a flowchart showing a delivery point retrieving subroutine in the e-mail transfer process of FIG. 22. FIG. 25 is a flowchart showing an e-mail transfer subroutine in the e-mail transfer process of FIG. 22.

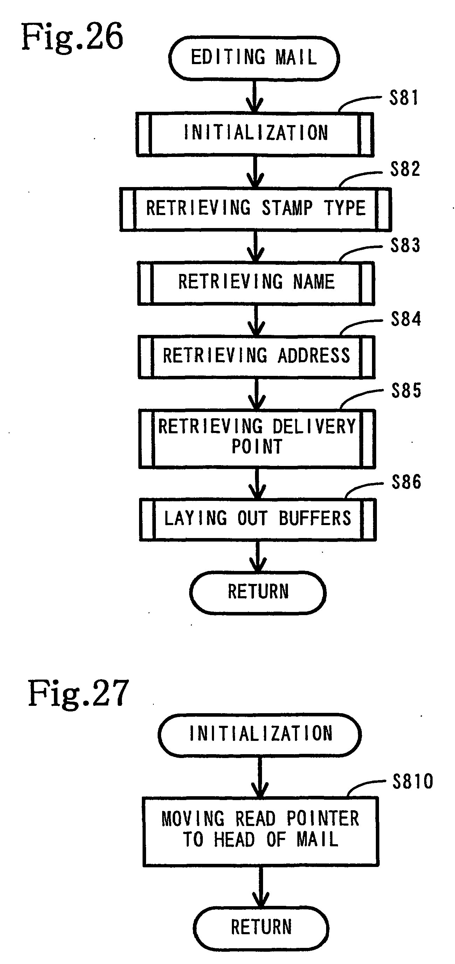

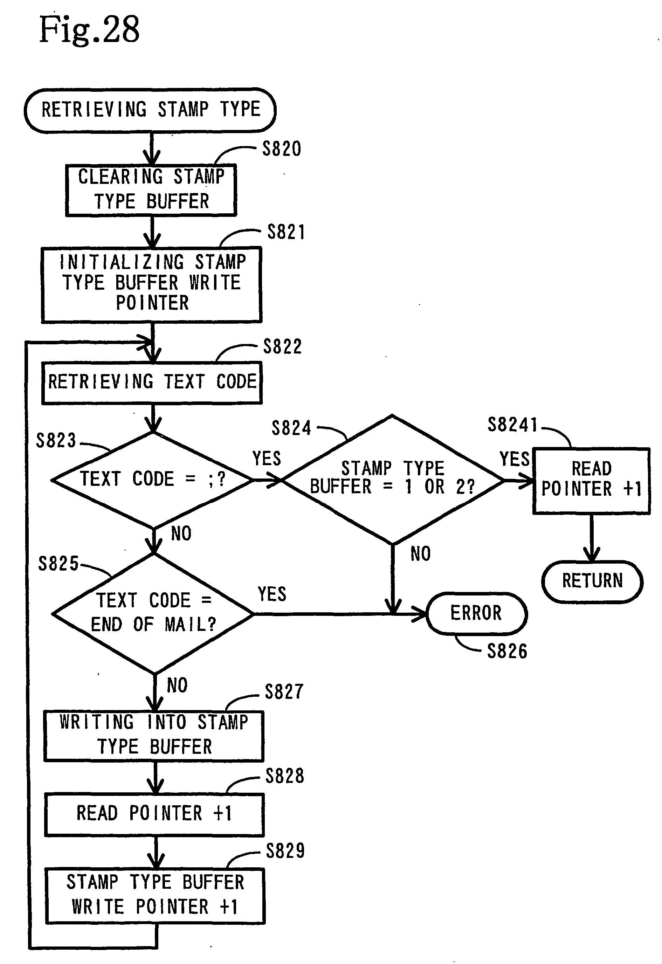

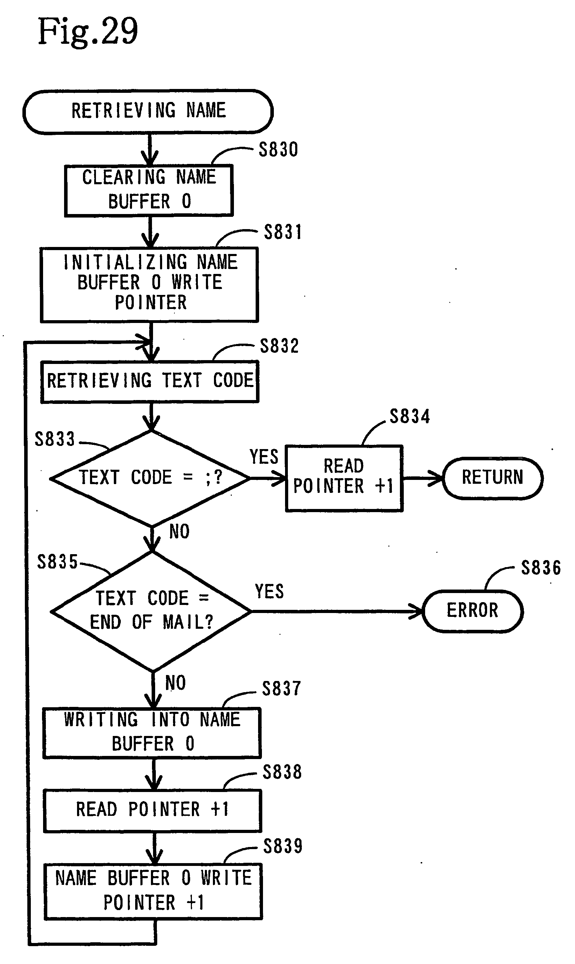

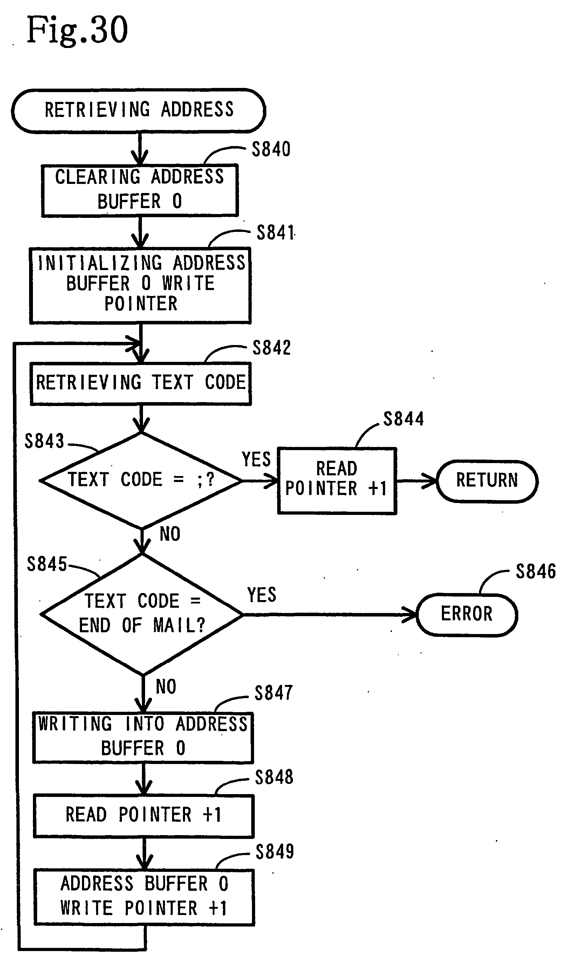

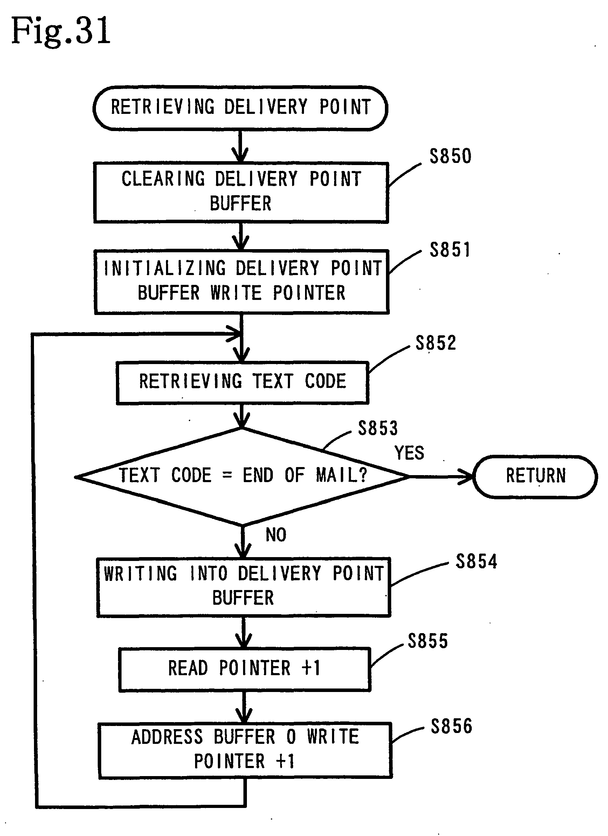

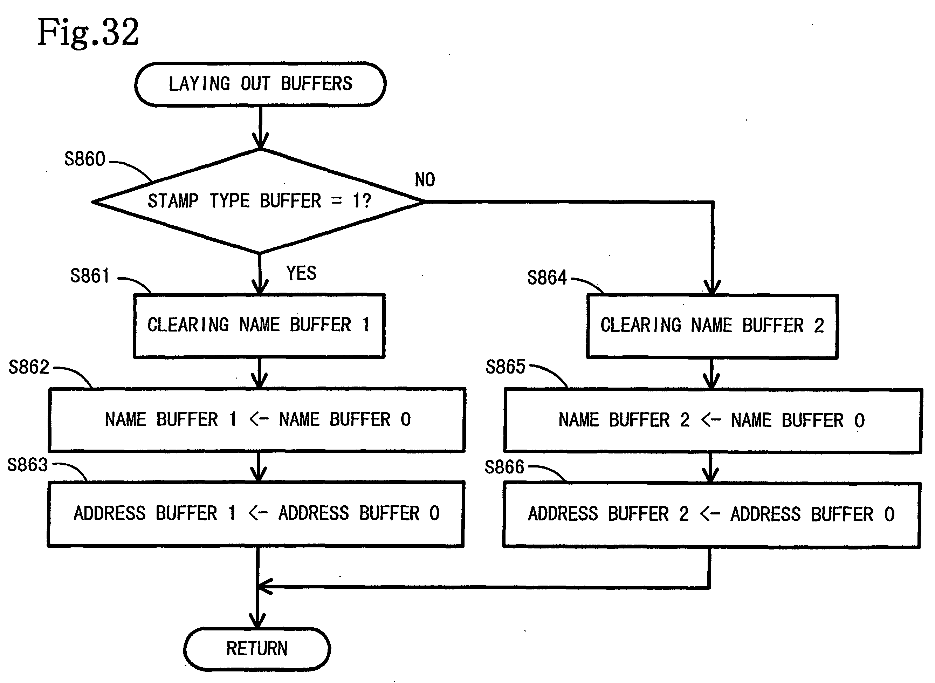

FIG. 26 is a flowchart showing an e-mail editing process in the output terminals 17a, 17b. FIG. 27 is a flowchart of an initialization subroutine in the e-mail editing process of FIG. 26. FIG. 28 is a flowchart of a stamp type retrieving subroutine in the e-mail editing process of FIG. 26. FIG. 29 is a flowchart of a name retrieving subroutine in the e-mail editing process of FIG. 26. FIG. 30 is a flowchart of an address retrieving subroutine in the e-mail editing process of FIG. 26. FIG. 31 is a flowchart of a delivery point retrieving subroutine in the e-mail editing process of FIG. 26. FIG. 32 is a flowchart of a buffer laying-out subroutine in the e-mail editing process of FIG. 26.

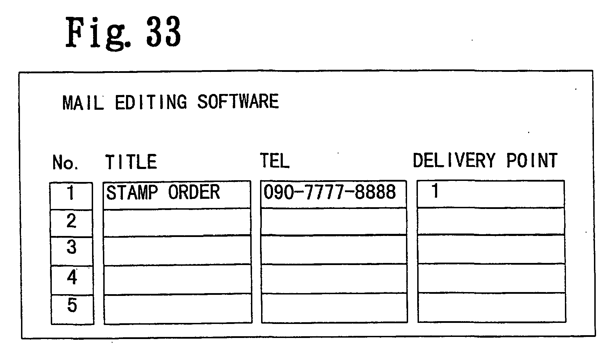

FIG. 33 shows a screen of an e-mail editing program displayed on the display of the output terminal 17a or 17b.

First, in step S101, customers 11a, 11b operate the operation unit 72 of their respective cellular phones 12a, 12b to compose e-mail containing text data on a stamp desired to be produced. E-mail is composed, in the same manner as in the first embodiment, by following a predetermined rule, that is, by delimiting each entry item by a semicolon.

In the third embodiment, the customers 11a, 11b can select a delivery point of the stamp 20 produced. The stamp delivery point can be arbitrarily selected from two locations (for example, "1=exit" and "2=front of Ferris wheel"). Thus, the e-mail composed in this embodiment contains four entry items, namely, the stamp type, entry item 1 (for example, a name), entry item 2 (for example, an address), and the stamp delivery point.

Then in step S102, the customer 11a presses an e-mail transmission button of the cellular phone 12a to transmit the e-mail composed in step S101 to the cellular phone 15.

Then in step S103, the cellular phone 15 receives the e-mail transmitted from the cellular phones 12a, 12b. The e-mail received by the cellular phone 15 is loaded into the host computer 18 using the e-mail loading program. The loaded e-mail is stored in the RAM of the host computer 18. Each piece of e-mail received by the host computer 18 preferably includes, in its header, data representing the e-mail sender's cellular phone number, other than text data representing the stamp type, name, address, and delivery point entered in step S101.

In step S103, e-mail for acknowledging receipt of e-mail or for notifying of the time of completion of a stamp estimated from the order situations may be returned to the respective cellular phones 12a, 12b of the customers 11a, 11b. This obviates the need for the customers 11a, 11b to wait for the stamp 20 at a delivery place.

Then in step S104, the e-mail loaded into the host computer 18 in step S103 is transferred, as described below, to either of the cellular phones 16a or 16b connected to the output terminals 17a, 17b, respectively, using the e-mail transfer program and the e-mail unloading program. As shown in FIG. 22, the e-mail transfer process includes three steps, namely, initialization (step S41), retrieval of delivery point (step S42), and e-mail transfer to delivery point (step S43). These steps will be described with reference to FIGS. 23 through 25.

In the initialization step (step S41), as shown in the step S410 of FIG. 24, a read pointer stored in the RAM of the host computer 18 for indicating an e-mail read point is moved to the end of the body of a piece of e-mail to be edited.

In the delivery point retrieving step (step S42), the contents of the delivery point buffer in the RAM are cleared, as shown in FIG. 24. Then in step S421, a delivery point buffer write pointer that indicates a data write point in the delivery point buffer is initialized. Then in step S422, a text code at a point indicated by the read pointer is retrieved from the body of the piece of e-mail. Then it is determined, in step S423, whether the text code is indicative of a delimiting symbol (for example, a semicolon (;)) for an entry item.

When the text code is indicative of a delimiting symbol (S423: YES), control goes to step S429 on the assumption that the delivery point data has already been retrieved. In step S429, it is determined whether the data retrieved and stored in the delivery point buffer is data representing the delivery point ("1" or "2" in this embodiment). As a result, when the data stored in the delivery point buffer is the data representing the delivery point (S429: YES), this subroutine is completed on the assumption that the data representing the delivery point has been correctly retrieved. When the data stored in the delivery point buffer is not the data representing the delivery point (S429: NO), control goes to step S425, where error handling is performed.

On the other hand, when the text code is not indicative of a delimiting symbol (S423: NO), control goes to step S424 on the assumption that the delivery point has not yet been retrieved. In step S424, it is determined whether the read pointer is at the head of the piece of e-mail. When the read pointer is determined to be at the head of the piece of e-mail (S424: YES), control goes to step S425, where error handling is performed.

When the read pointer is determined not to be at the head of the piece of e-mail (S424: NO), the text code retrieved in step S422 is written into the delivery point buffer in step S426. Then in the step S427, the read pointer is decremented by one and, in step S428, the delivery point buffer write pointer is decremented by one. After that, control returns to step S422. By repeating these steps, the text code representing the delivery point ("1" or "2" in this embodiment) is written into the delivery point buffer in the RAM of the host computer 18.

Then in the step of e-mail transfer to the delivery point (step S43), as shown in FIG. 25, it is determined, in step 5430, whether "1" is contained in the delivery point buffer in the RAM. When "1" is contained (S430: YES), control goes to step S431, where the host computer 18 transmits data to the cellular phone 15, using the e-mail unloading program, in order to transfer a received piece of e-mail to the destined cellular phone 16a (at the "exit" in this embodiment) associated with the delivery point "1". The data is transmitted as a piece of e-mail destined for the cellular phone 16a and has the same body as the body of the data transmitted from the cellular phone 12a or 12b. When "2" is contained in the delivery point buffer (S430: NO), control goes to step S432, where the host computer 18 transmits data to the cellular phone 15, using the e-mail unloading program, in order to transfer a received piece of e-mail to the destined cellular phone 16b (in "front of Ferris wheel" in this embodiment) associated with the delivery point "2". The data is transmitted as a piece of e-mail destined for the cellular phone 16b and has the same body as the body of the data transmitted from the cellular phone 12a or 12b.

Then in step S105, the cellular phone 15 transmits the piece of e-mail received from the host computer 18 to the designated cellular phone 16a or 16b, via the base station 13a, (the switching station 14, and the base station 13b). In step S106, the cellular phone 16a or 16b receives the transferred piece of e-mail and stores it in its RAM 63.

Then in step S107, the output terminal 17a or 17b loads, using the e-mail loading program installed therein, the piece of e-mail from the cellular phone 16a or 16b and stores it in its RAM 83.

Then in step S108, the e-mail editing program is started to select a piece of e-mail to be edited from a list of pieces of e-mail (FIG. 33) stored in the RAM 83 of the output terminal 17a or 17b. The selected piece of e-mail is processed using the e-mail editing program as described below. The e-mail editing process, as shown in FIG. 26, includes six steps, namely, initialization (step S81), retrieval of stamp type (step S82), retrieval of name (step S83), retrieval of address (step S84), retrieval of delivery point (step S85), and buffer layout (step S86). These steps will be described with reference to FIGS. 27 through 32.

In the initialization step (step S81), as shown in step S810 of FIG. 28, a read pointer stored in the RAM 83 of the output terminal 17a or 17b for indicating an e-mail read point is moved to the head of the body of the piece of e-mail to be edited.

In the stamp type retrieving step (step S82), the contents of the stamp type buffer in the RAM 83 are cleared in step S820, as shown in FIG. 28. Then in step S821, a stamp type buffer write pointer for indicating a data write point in the stamp type buffer is initialized. Then in step S822, a text code at a point indicated by the read pointer is retrieved from the body of the piece of e-mail. Then it is determined, in step 823, whether the text code is indicative of a delimiting symbol (for example, a semicolon (;)) for an entry item.

When the text code is indicative of a delimiting symbol (S823: YES), control goes to step S824 on the assumption that the stamp type data has already been retrieved. In step S824, it is determined whether the data retrieved and stored in the stamp type buffer is data representing the stamp type ("1" or "2" in this embodiment). As a result, when the data stored in the stamp type buffer is the data representing the stamp type (S824: YES), control goes to step S8241 on the assumption that the data representing the stamp type has been correctly retrieved, and the read pointer is incremented by one and this subroutine is completed. When the data stored in the stamp type buffer is not the data representing the stamp type (S824: NO), control goes to step S826, where error handling is performed.

On the other hand, when the text code is not indicative of a delimiting symbol (S823: NO), control goes to step S825 on the assumption that the stamp type has not yet been retrieved. In step S825, it is determined whether the text code retrieved in step S822 is a code suffixed on and indicative of the end of the body of the piece of e-mail (or whether retrieval of a text code was failed in step S822). When the text code is determined to be a code indicative of the end of the body of the piece of e-mail (S825: YES), control goes to step S826, where error handling is performed.

When the text code is determined not to be a code indicative of the end of the body of the piece of e-mail, (S825: NO), the text code retrieved in step S822 is written into the stamp type buffer. Then in the step S828, the read pointer is incremented by one and, in step S829, the stamp type buffer write pointer is incremented by one. After that, control returns to step S822. By repeating these steps, the text code representing the stamp type ("1" or "2" in this embodiment) is written into the stamp type buffer in the RAM 83 of the output terminal 17a or 17b.

In the name retrieving step (step S83), the contents of the name buffer 0 in the RAM 83 are cleared in step S830, as shown in FIG. 29. Then in step S831, a name buffer 0 write pointer for indicating a data write point in the name buffer 0 is initialized. Then in step S832, a text code at a point indicated by the read pointer is retrieved from the body of the piece of e-mail. Then it is determined, in step 833, whether the text code is indicative of a delimiting symbol (for example, a semicolon (;)) for an entry item.

When the text code is determined to be indicative of a delimiting symbol (S833: YES), control goes to step S834 on the assumption that the name data has already been retrieved. In step S834, the read pointer is incremented by one and this subroutine is completed. On the other hand, when the text code is determined not to be indicative of a delimiting symbol (S833: NO), control goes to step S835 on the assumption that the name data has not yet been retrieved. In step S835, it is determined whether the text code retrieved in step S832 is a code suffixed on and indicative of the end of the body of the piece of e-mail (or whether retrieval of a text code was failed in step S832). When the text code is determined to be a code indicative of the end of the body of the piece of e-mail (S835: YES), control goes to step S836, where error handling is performed.

When the text code is determined not to be a code indicative of the end of the body of the piece of e-mail (S835: NO), the text code retrieved in step S832 is written into the name buffer 0. Then in the step S838, the read pointer is incremented by one and, in step S839, the name buffer 0 write pointer is incremented by one. After that, control returns to step S832. By repeating these steps, text data representing the name desired by the customer to be engraved is written into the name buffer 0 in the RAM 83 of the output terminal 17a or 17b.

In the address retrieving step (step S84), the contents of the address buffer 0 in the RAM 83 are cleared in step 5840, as shown in FIG. 30. Then in step S841, an address buffer 0 write pointer for indicating a data write point in the address buffer 0 is initialized. Then in step S842, a text code at a point indicated by the read pointer is retrieved from the body of the piece of e-mail. Then it is determined, in step 843, whether the text code is indicative of a delimiting symbol (for example, a semicolon (;)) for an entry item.

When the text code is determined to be indicative of a delimiting symbol (S843: YES), control goes to step S844 on the assumption that the address data has already been retrieved. In step S844, the read pointer is incremented by one and this subroutine is completed. When the text code is determined not to be indicative of a delimiting symbol (S843: NO), control goes to step S845 on the assumption that the address data has not yet been retrieved.

In step S845, it is determined whether the text code is suffixed on and indicative of the end of the body of the piece of e-mail (or whether retrieval of a text code was failed in step S842). When the text code is determined to be a code indicative of the end of the body of the piece of e-mail (S845: YES), control goes to step S846, where error handling is performed.

When the text code is determined not to be a code indicative of the end of the body of the piece of e-mail (S845: NO), the text code retrieved in step S842 is written into the address buffer 0 in step S847. Then in the step S848, the read pointer is incremented by one and, in step S849, the address buffer 0 write pointer is incremented by one. After that, control returns to step S842. By repeating these steps, text data representing the address desired by the customer to be engraved is written into the address buffer 0 in the RAM 83 of the output terminal 17a or 17b.

Then in the delivery point retrieving step (step S85), the contents of the delivery point buffer in the RAM 83 are cleared in step S850, as shown in FIG. 31. Then in step S851, a delivery point write pointer for indicating a data write point in the delivery point buffer is initialized. Then in step S852, a text code at a point indicated by the read pointer is retrieved from the body of the piece of e-mail.

Then in step S858, it is determined whether the text code is a code suffixed on and indicative of the end of the body of the piece of e-mail (or whether retrieval of a text code was failed in step S852). When the text code is determined to be a code indicative of the end of the body of the piece of e-mail (S853: YES), this subroutine is completed on the assumption that the delivery point data has already been retrieved.

When the text code is determined not to be a code indicative of the end of the body of the piece of e-mail (S853: NO), the text code retrieved in step S852 is written into the delivery point buffer in step S854. Then in the step S855, the read pointer is incremented by one and, in step S856, the delivery point buffer write pointer is incremented by one. After that, control returns to step S852. By repeating these steps, text data representing the delivery point desired by the customer is written into the delivery point buffer in the RAM 83 of the output terminal 17a or 17b.

Then in the buffer laying-out step (step S86), it is determined whether "1" or "2" is written into the stamp type buffer in the RAM 83 of the output terminal 17a or 17b. When the stamp type is "1" (S860: YES), the name buffer 1 and the address buffer 1 in the RAM 83 are cleared in step S861. Then the contents of the name buffer 0 are written into the name buffer 1 in step S862, and the contents of the address buffer 0 is written into the address buffer 1 in step S863. On the other hand, when the stamp type is "2" (S860: NO), the name buffer 2 and the address buffer 2 in the RAM 83 are cleared in step S864. Then the contents of the name buffer 0 are written into the name buffer 2 in step S865, and the contents of the address buffer 0 are written into the address buffer 2 in step S866. In this way, the buffers are laid out and the e-mail editing step is completed.

In this embodiment, the delivery point data is contained in each piece of e-mail transmitted from the host computer 18. In addition, the delivery point data is retrieved into the output terminal 17a or 17b in step S85. Step S85 is not necessarily required but allows the output terminal 17a or 17b to confirm the stamp delivery point.

Then control goes back to step S109 of FIG. 21, where, from among the data edited in step S108, the contents of the stamp type buffer, the contents of the name buffer 1 or 2, whichever is updated more recently, and the contents of the address buffer 1 or 2, whichever is updated more recently are transmitted to the stamp producing device 19a or 19b as the stamp producing data.

The stamp producing device 19a or 19b, in turn, receives the stamp producing data from the output terminal 17a or 17b and stores it in the RAM 93. The CPU 91 generates dot matrix data for engraving the stamp face by referring to font data of letters and data of a cartoon character stored in the ROM 92, based on the stamp producing data stored in the RAM 93, and stores the generated dot matrix data in an image buffer in the RAM 93. Then the stamp 20 (FIG. 17) having a desired engraved stamp face as shown in FIG. 16 is produced by the thermal head 26 and the motors 98 driven based on the dot matrix data.

Then in step S110, the stamp 20 is provided to the customer cash on delivery.

As described above, in the third embodiment, the customers 11a, 11b can select a more convenient location as a stamp delivery point from the two locations, and get the stamp 20 at a location relatively near the customers 11a, 11b without the trouble of going to a distant delivery point.

Also, in the third embodiment, orders from the customers 11a, 11b are centralized in the host computer 18. This allows the customers 11a, 11b to just send data to the single host computer 18, without the trouble of selecting one of the output terminals 17a, 17b as a destination of data transmission, which will be a delivery point. As a result, erroneously destined data transmission is prevented. Also, order management can be performed only by the host computer 18.

Also, in this embodiment, because stamp producing data is generated and transmitted using the cellular phones 12a, 12b, the customers 11a, 11b can order a stamp conveniently from various locations, at home and away from home, in their spare time.

Further, as shown in this document, a wireless receiver (preferably a cellular phone) is connected to each of the host computer 18 and the output terminals 17a, 17b. Such a configuration allows the host computer 18 and the output terminals 17a, 17b to be installed in locations, within the cellular phone service area, where connection with a public line is hardly established. Accordingly, the installation sites of these devices can be selected more freely and the environment for the host computer 18 and the output terminals 17a, 17b to receive data can be built at a lower cost.

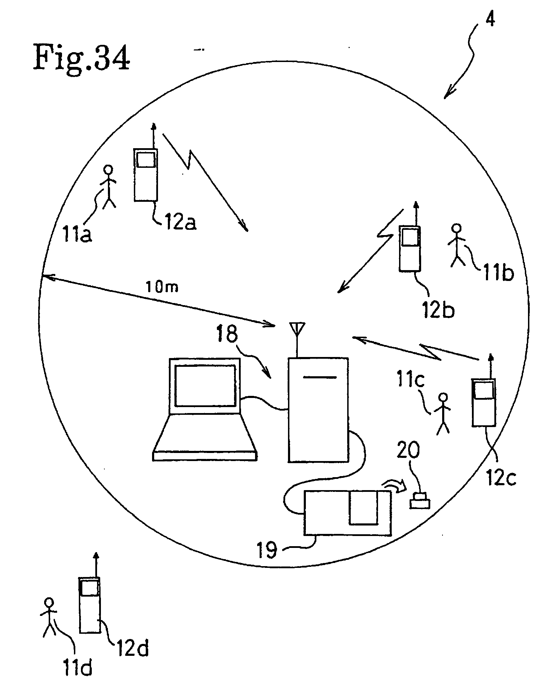

Lastly, a stamp providing system according to a fourth embodiment of the invention will be described with reference to FIG. 34, which is a schematic diagram showing a configuration thereof. In the fourth embodiment, as shown in FIG. 34, a stamp producing device 19 located within a relatively short range from a number of customers (only four consumers 11a-11d are shown here by way of example) produces a stamp 20, based on stamp producing data transmitted over the air using a wireless short-range data transmission technique (such as Bluetooth) from cellular phones 12a-12d, which are portable wireless data receivers/transmitters owned by the respective consumers 11a-11d. The cellular phones 12a-12d used in this embodiment have, aside from a function of receiving/transmitting voice by converting it to digital (or analog) signals, a function of receiving/transmitting textual information by converting it to code data from/to other computers and cellular phones that adopt the same wireless short-range data transmission technique.

Code data sent from the cellular phones 12a-12d is sent to a host computer 18 connected to the stamp producing device 19. The code data contains text data to be engraved on a stamp material of, the stamp 20. The data containing textual information and sent from the cellular phones 12a-12d as digital signals is directly received by the host computer 18, which adopts the same wireless short-range data transmission technique as that adopted by the cellular phones 12a-12d.

In the forth embodiment, a wireless short-range data communication technique is adopted as a data communication interface between the cellular phones 12a-12d and the host computer 18. This allows only cellular phones located within a relatively short range from the host computer 18 to communicate with the host computer 18. For example, when Bluetooth using a career frequency band of 2.4 GHz is adopted as the wireless short-range data communication technique, only cellular phones located within approximately 10 m from the host computer 18 can communicate with the host computer 18. Thus, in the case of FIG. 34, the cellular phones 12a, 12b, 12c can transmit data to the host computer 18, but the cellular phone 12d cannot do so. The adoption of Bluetooth advantageously enables high-speed data transmission between cellular phones and the host computer 18 at approximately 1M bit/second even when there is an obstruction therebetween.

In the fourth embodiment, the host computer 18 and the stamp producing device 19 constitute an output producing device.

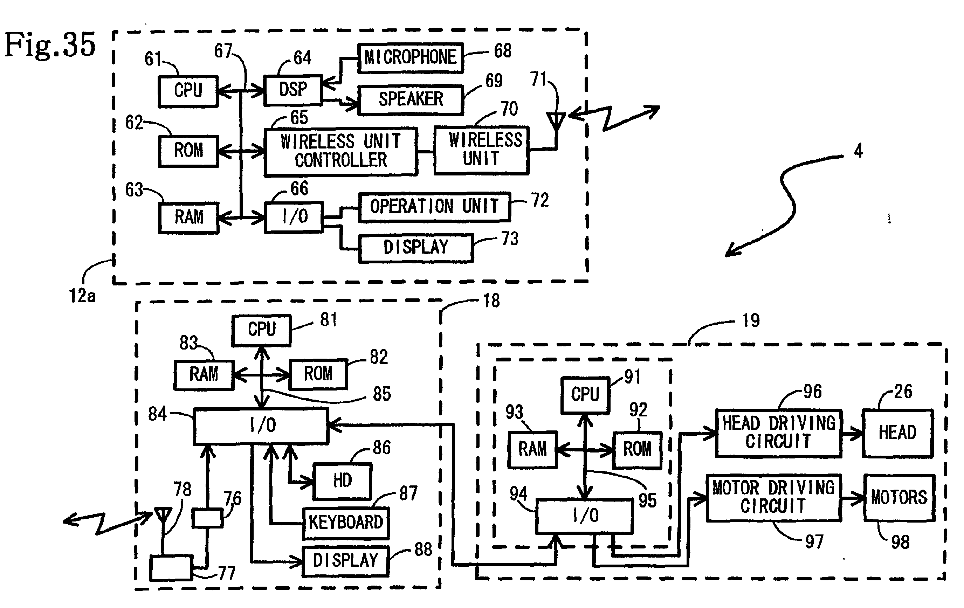

Referring now to FIG. 35, a control system of the stamp providing system 4 according to the fourth embodiment will be described. FIG. 35 is a block diagram showing a control system of the stamp providing system 4. In FIG. 35, only one (cellular phone 12a) of a number of cellular phones usable in the stamp providing system 4 according to the fourth embodiment is representatively shown. Elements structurally similar to those in the first embodiment have the same reference numbers and a detailed description thereof will be omitted.

The constituents of each part in the fourth embodiment are similar to those in the first embodiment, and a detailed description thereof is omitted. The cellular phone 12a in this embodiment differs from the first embodiment in that its wireless unit 70 is structured in conformity with the short-range wireless data transmission standards, such as Bluetooth, and transmits over the air desired voice data and text data, as digital signals, from an antenna 71 to an antenna 78 of the host computer 18. Conversely, the wireless unit 70 is also used to directly receive data transmitted from the host computer 18 via the antenna 71.

Similarly to the wireless unit 70 of the cellular phone 12a, the wireless unit 77 of the host computer 18 in this embodiment is also structured in conformity with the short-range wireless data transmission standards, such as Bluetooth. The wireless unit 77 receives data transmitted from the cellular phones 12a-12d via the antenna 78. Conversely, the wireless unit 77 is also used to transmit over the air desired voice data and text data, as digital signals, from the antenna 78 to the cellular phones 12a-12d.

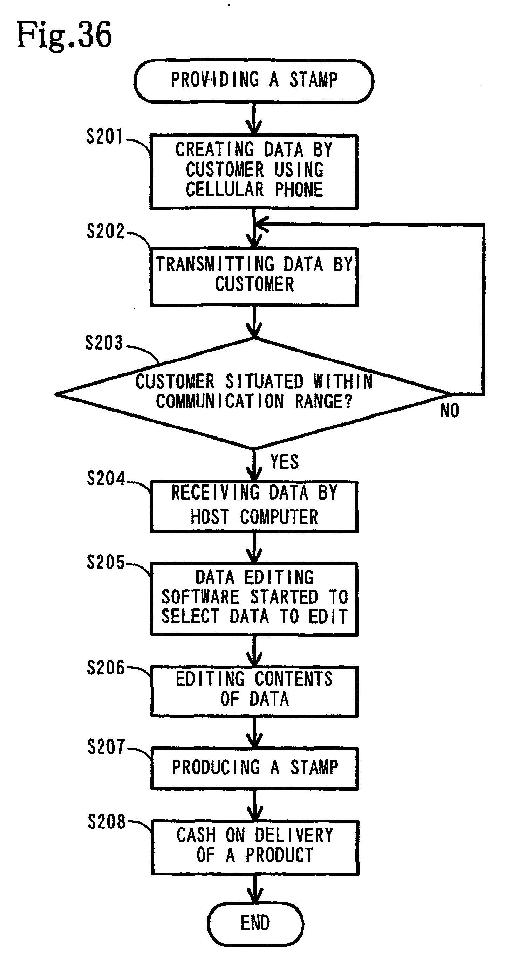

Referring now to FIG. 36, stamp providing steps in the stamp providing system 4 according to the embodiment will be described. The steps identified by the same names as in the first embodiment involve the same processes as in the first embodiment, and thus a detailed description of the internal processes will be omitted.

First, in step 201, the customers 11a-11d operate the operation unit 72 of their respective cellular phones 12a-12d to create a data file including text data for a desired stamp to be produced.

Then in step S202, the consumer 11a presses a data transmission button of the cellular phone 12a to transmit the data file created in step S201 to the host computer 18.

At this time, when the cellular phones 12a-12d are located within a predetermined range from the host computer 18 (within approximately 10 m in the case of Bluetooth)(step S203: YES), control goes to step S204. On the other hand when the cellular phones 12a-12d are not located within the predetermined range from the host computer 18 (step S203: NO), control returns to S202. During creation of a data file in step S201, however, cellular phones are not necessarily required to be located within the predetermined range from the host computer 18, and consumers, if they have a cellular phone, can create a data file for ordering a desired stamp at anytime and anywhere.

In step S204, the host computer 18 directly receives the data file transmitted from the cellular phones 12a-12d. The received data file is stored in the RAM 83 of the host computer 18.

In step S205, the host computer 18 starts a data editing program installed therein and selects a data file to edit from a list of received data files. Then in step S206, the host computer 18 edits the data file selected in step S205, using the data editing program.

In step S207, the data edited in step S206 is supplied to the stamp producing device 19. The stamp producing device 19, in turn, receives the stamp producing data from the host computer 18 and stores it in the RAM 93. The CPU 91 generates dot matrix data for engraving the stamp face by referring to font data of letters and data of a cartoon character stored in the ROM 92, based on the stamp producing data stored in the RAM 93, and stores the dot matrix data in an image buffer in the RAM 93. Then the stamp 20 (FIG. 17) having a desired engraved stamp face as shown in FIG. 16 is produced by the thermal head 26 and the motors 98 driven based on the dot matrix data. Finally, in step S208, the stamp 20 is delivered to the customer 11a cash on delivery.

As described above, in the fourth embodiment, because the range that permits communication between the cellular phones 12a-12d and the host computer 18 is limited to a relatively short range, operators (consumers) of the cellular phones 12a-12d must actually go to a location close to the host computer 18 to order the stamp 20. Thus, customers cannot get the specially designed stamp 20 produced by the stamp producing device 19 without going to a location close to the host computer 18. As compared with the case where data is sent, in the form of e-mail, from the cellular phones 12a-12d to the host computer 18 via a base station and a public line, the host computer 18 can receive orders only from customers situated within an extremely narrow range. Accordingly, value can be added to the stamp 20 produced by the stamp producing device 19. The fourth embodiment is suitable for use in an amusement facility.

As a specific application of the forth embodiment to an amusement facility, for example, it is conceivable that the host computer 18 and the stamp producing device 19 (or another output producing device) is installed in each pavilion of an amusement facility so that a different stamp (or content) is produced in each pavilion. It is expected that customers make a stop at all pavilions to gather all types of stamps.

The data transmitted from the cellular phones 12a-12d bypasses a base station and a public line and is directly received by the host computer 18. Thus, there is no need to pay communication fees to a cellular phone service company and a public line company, and the cost of communication between the cellular phones 12a-12d and the host computer 18 can be significantly reduced.

While the invention has been described in connection with specific preferred embodiments thereof, it should be understood that the invention is not limited to the above-described embodiments and various modifications can be made without departing from the scope of the invention as defined in the claims. For example, if a name card producing device, instead of the stamp producing device, is connected to the host computer 18, a stamp providing system can be configured. Also, CDs (compact discs) in which voice is recorded can be provided using a voice data recorder, or stickers/labels with an image printed thereon can be provided using a device for producing a sticker/label upon receipt of image data.

Although, in the first, second, and third embodiments, the electronic mailing system where e-mail is automatically sent to the host computer 18 is described by way of example, another electronic mailing system can be used, where e-mail is stored in an e-mail server separate from the host computer 18 and is received by the host computer 18 by access to the e-mail server. Also, in the above-described embodiments, the number of entry items and the types of the stamp designs can be arbitrarily changed.

Further, a device used by a customer to transmit e-mail is not limited to a cellular phone, and any device can be used if it is capable of wireless transmission. For example, e-mail may be transmitted using a mobile computer or a PDA (Personal Digital Assistant). Instead of wireless transmission using a cellular phone or Bluetooth, infrared wireless communication in conformity with IrDA (Infrared Data Association) standards may be used.

Although, in the fourth embodiment, the data receiver and the output producing device are disposed in a pair (or adjacent to each other), the data receiver and the output producing device may be disposed distant from each other if data transmission can be accomplished therebetween by wired communication or long-range wireless communication. When a plurality of data receivers and a plurality of output producing devices are disposed distant to each other and configured to enable data transmission therebetween, an output can be produced at a designated delivery point as in the third embodiment.

Although, in the fourth embodiment, data transmission from the host computer 18 to each customer is performed by short-range wireless communication (Bluetooth), data transmission from the host computer 18 may be performed by long-range communication. Especially, it is preferable that acknowledgement of receipt of an order from a customer and notification of completion of an output are reliably made by long-range communication.

## Claims

1. An output providing system for providing a tangible output (20) in response to each request from customers (11a-11d), the system comprising:
an electronic mail (e-mail) receiver (18) that can receive pieces of e-mail from the customers (11a-11d), by wireless communication, each piece of e-mail containing data to be included in a requested output (20) along with customer information;
an e-mail returning device (18) that returns, upon receipt of each piece of e-mail by the e-mail receiver (18), a piece of e-mail for acknowledging receipt of each request to each of the customers (11a-11d), based on the customer information;
a data analyzer (18) that analyzes contents of each piece of e-mail received by the e-mail receiver (18) and converts the data on the requested output to image data to be outputted on an output medium;
an output producing device (19) that receives the image data and outputs an image on the output medium;
an e-mail transmitter that transmits a piece of e-mail for notifying each of the customers (11a-11d) of completion of production of the requested output (20) by the output producing device (19); and
a storage device (30) for storing a produced output in association with the customer information, wherein the storage device (30) authenticates each of the customers (11a-11d) based on the customer information and, upon confirmation or authenticity of each of the customers (11a-11d), provides a stored output associated with the customer information to each of the customers (11a-11d);
wherein
at least the output producing device (19) and the storage device (30) are installed in a pair in each of a plurality of locations;
each piece of e-mail received from each of the customers (11a-11d) contains information about an output providing location designated by each of the customers (11a-11d);
and the data analyzer (18) receives the information about the output providing location and transfers the image data to the output producing device (19) installed in a designated providing location, the output producing device (19) at the designated providing location producing the requested output (20), and the storage device (30) installed in the designated providing location storing the produced output (20).

2. The output providing system according to claim 1, wherein the customer information is a customer's e-mail address.

3. The output providing system according to claim 1, wherein the pieces of e-mail received from the customers (11a-11d) are transmitted by cellular phones (12a-12d), and the customer information is a phone number assigned to each of the cellular phones (12a-12d).

4. The output providing system according to one of claims 1 to 3,
wherein the e-mail receiver (18) receives the pieces of e-mail from the customers (11a-11d) using a short-range wireless data communication technique.

5. The output providing system according to claim 1, wherein the output providing system is installed in an amusement facility having a plurality of pavilions, and the e-mail receiver (18) is installed in each of the plurality of pavilions and is allowed to receive only pieces of e-mail transmitted from the customers (11a-11d) within each of the plurality of pavilions, or
having a plurality of pavilions, and at least the output producing device (19) and the storage device (30) are installed in a pair in each of the plurality of pavilions, or
having a plurality of gates, and at least the output producing device (19) and the storage device (30) are installed in a pair in each of the plurality of gates.

6. The output providing system according to one of claims 1 to 5, further comprising an estimated time calculator that detects, upon receipt of each piece of e-mail from each of the customers (11a-11d) by the e-mail receiver (18), a number of pieces of e-mail already received and operation conditions of the output producing device (19) and, based on results of detection, calculates an estimated time of completion of the requested output, wherein the e-mail returning device (18) returns the piece of e-mail further including the estimated time of completion to each of the customers (11a-11d).

7. The output providing system according to one of claims 1 to 6, wherein the output producing device (19) can produce a stamp (20) as tangible output.

8. An output providing system for providing a tangible output (20) in response to each request from customers (11a-11d), the system comprising:
a data receiver (18) that can receive, by wireless communication, output producing data to be included in an output (20) in a first format and customer ID information;
a memory (83) that can store sets of the output producing data and the customer ID information, each set including a piece of output producing data and a piece of customer ID information;
a data analyzer (18) that analyzes each piece of output producing data in the first format and converts it to a piece of data in a second format;
an output producing device (19) that receives the piece of data in the second format converted by the data analyzer (18) and records the piece of data in the second format on an output medium to produce an output (20);
a delivery device that delivers the output produced to a location defined by each piece of customer ID information; and
a storage device (30) for storing a produced output in association with the customer information, wherein the storage device (30) authenticates each of the customers (11a-11d) based on the customer information and, upon confirmation of authenticity of each of the customers (11a-11d), provides a stored output associated with the customer information to each of the customers (11a-11d);
wherein
at least the output producing device (19) and the storage device (83) are installed in a pair in each of a plurality of locations;
each piece of e-mail received from each of the customers (11a-11d) contains information about an output providing location designated by each of the customers (11a-11d); and
the data analyzer (18) receives the information about the output providing location and transfers the image data to the output producing device (19) installed in a designated providing location, the output producing device (19) at the designated providing location producing the requested output, and the storage device (30) installed in the designated providing location storing the produced output.

9. A method of providing a tangible output in response to each request from customers (11a-11d), the method comprising the steps of:
receiving, by wireless communication, output producing data to be included in an output (20) in a first format and customer information, including information about an output providing location designated by each of the customers (lla-11d) ;
sequentially storing sets of the output producing data, the customer information, and the output providing location, each set including a piece of output producing data, a piece of customer information, and the output providing location;
analyzing each piece of output producing data in the first format and converts it to a piece of data in a second format;
receiving the piece of data in the second format and recording the piece of data in the second format on an output medium to produce an output;
delivering the output produced to the location defined by each piece of customer information;
notifying each of the customers (11a-11d) of completion of the production of the requested output; and
storing a produced output in association with the customer information, authenticating each of the customers (11a-11d) based on the customer information, and upon confirmation of authenticity of each of the customers (11a-11d), providing a stored output associated with the customer information to each of the customers (11a-11d);
wherein the output is produced at a location at which the produced output is stored.

## Patentansprüche

1. Ausgabebereitstellungssystem zum Bereitstellen einer fühlbaren Ausgabe (20) als Antwort auf jede Anforderung eines Kunden (11a-11d), wobei das System aufweist:
einen Empfänger (18) elektronischer Post (E-Mail), der Stücke von einer E-Mail von den Kunden (11a-11d) über drahtlose Kommunikation empfangen kann, wobei jedes Stück der E-Mail Daten, die in einer angeforderten Ausgabe (20) einzuschließen sind, zusammen mit Kundeninformation enthält;
eine E-Mail-Rückgabeeinrichtung (18), die nach Empfangen eines jeden Stückes der E-Mail durch den E-Mail-Empfänger einer E-Mail zum Bestätigen des Empfanges einer jeden Anforderung an jeden Kunden (11a-11d) auf der Grundlage der Kundeninformation zurückgibt;
einen Datenanalysator (18), der Inhalte eines jedes Stückes der E-Mail, die von dem E-Mail-Empfänger (18) empfangen wird, analysiert und die Daten in der angeforderten Ausgabe in Bilddaten, die auf einem Ausgabemedium auszugeben sind, umwandelt;
eine Ausgabeerzeugungsvorrichtung (19), die die Bilddaten empfängt und ein Bild auf dem Ausgabemedium ausgibt;
einen E-Mail-Sender, der ein Stück von der E-Mail zum Benachrichtigen eines jeden der Kunden (11a-11d) über die Fertigstellung der angeforderten Ausgabe (20) durch die Ausgabevorrichtung (19) sendet; und
eine Speichervorrichtung (30) zum Speichern einer erzeugten Ausgabe in Verknüpfung mit der Kundeninformation, worin die Speichervorrichtung (30) jeden der Kunden (11a-11d) auf der Grundlage der Kundeninformation authentifiziert und nach Bestätigung oder Authentifizierung eines jeden Kunden (11a-11d) eine gespeicherte Ausgabe in Verknüpfung mit der Kundeninformation für jeden der Kunden (11a-11d) bereitstellt; eine gespeicherte Ausgabe in Verknüpfung mit der Kundeninformation für jeden der Kunden (11a-11d) bereitstellt;
mindestens die Ausgabeerzeugungsvorrichtung (19) und die Speichervorrichtung (30) in einem Paar in jedem einer Mehrzahl von Orten eingebaut sind;
jedes Stück der E-Mail, das von jedem der Kunden (11a-11d) empfangen ist, Information über einen Ausgabebereitstellungsort enthält, der von den Kunden (11a-11d) bezeichnet ist;
und der Datenanalysator (18) die Information über den Ausgabebereitstellungsort empfängt und die Bilddaten zu der Ausgabeerzeugungsvorrichtung (19) überträgt, die an einem bezeichneten Bereitstellungsort eingebaut ist, wobei die Ausgabeerzeugungsvorrichtung (19) an dem bezeichneten Bereitstellungsort die angeforderte Ausgabe (20) erzeugt, und die Speichervorrichtung (30), die in dem bezeichneten Bereitstellungsort eingebaut ist, die erzeugte Ausgabe (20) speichert.

2. Ausgabebereitstellungssystem nach Anspruch 1, bei dem die Kundeninformation eine E-Mail-Adresse des Kunden ist.

3. Ausgabebereitstellungssystem nach Anspruch 1, bei dem die Stücke der E-Mail, die von dem Kunden (11a-11d) empfangen werden, durch Mobiltelefone (12a-12d) gesendet werden, und die Kundeninformation eine Telefonnummer ist, die jedem der Mobiltelefone (12a-12d) zugeordnet ist.

4. Ausgabebereitstellungssystem nach einem der Ansprüche 1 bis 3,
bei dem der E-Mail-Empfänger (18) die Stücke der E-Mail von den Kunden (11a-11d) empfängt unter Benutzung einer drahtlosen Datenkommunikationstechnik kurzer Reichweite.

5. Ausgabebereitstellungssystem nach Anspruch 1, bei dem das Ausgabebereitstellungssystem in einer Vergnügungsanlage mit einer Mehrzahl von Pavillons eingebaut ist und der E-Mail-Empfänger (18) in jedem der Mehrzahl von Pavillons eingebaut ist und nur Stücke einer E-Mail empfangen kann, die von den Kunden (11a-11d) innerhalb von jedem der Mehrzahl von Pavillons gesendet sind, oder
mit einer Mehrzahl von Pavillons, und mindestens die Ausgabeerzeugungsvorrichtung (19) und die Speichervorrichtung (30) sind in einem Paar in jedem der Mehrzahl von Pavillons eingebaut, oder
mit einer Mehrzahl von Toren, und mindestens die Ausgabeerzeugungsvorrichtung (19) und die Speichervorrichtung (30) sind in einem Paar in jedem der Mehrzahl von Toren eingebaut.

6. Ausgabebereitstellungssystem nach einem der Ansprüche 1 bis 5, weiter mit einem Berechner geschätzter Zeit, der nach Empfang eines jeden Stückes der E-Mail von den Kunden (11a-11d) durch den E-Mail-Empfänger (18) eine Zahl von Stücken von E-Mails, die bereits empfangen sind, und von Betriebsbedingungen der Ausgabeerzeugungsvorrichtung (19) erfaßt und auf der Grundlage von Resultaten der Erfassung eine geschätzte Zeit des Fertigstellens der angeforderten Ausgabe berechnet, worin die E-Mail-Rückgabeeinrichtung (18) das Stück der E-Mail an jeden der Kunden (11a-11d) zurückgibt, das weiter die geschätzte Zeit des Fertigstellens enthält.

7. Ausgabebereitstellungssystem nach einem der Ansprüche 1 bis 6, bei dem die Ausgabeerzeugungsvorrichtung (19) einen Stempel (20) als fühlbare Ausgabe erzeugen kann.

8. Ausgabebereitstellungssystem zum Bereitstellen einer fühlbaren Ausgabe (20) als Antwort auf jede Anforderung von Kunden (11a-11d), wobei das System aufweist:
einen Datenempfänger (18), der durch drahtlose Kommunikation Ausgabeerzeugungsdaten empfangen kann, die in einer Ausgabe (20) in einem ersten Format einzuschließen sind, und Kundenidentifikationsinformation;
einen Speicher (83), der Sätze der Ausgabeerzeugungsdaten und die Kundenidentifikationsinformation speichern kann, wobei jeder Satz ein Stück von Ausgabeerzeugungsdaten und ein Stück der Kundenidentifikationsinformation enthält;
einen Datenanalysator (18), der jedes Stück der Ausgabeerzeugungsdaten in dem ersten Format analysiert und es in ein Stück von Daten in einem zweiten Format umwandelt;
eine Ausgabeerzeugungsvorrichtung (19), die das Stück der Daten in dem zweiten Format empfängt, das durch den Datenanalysator (18) umgewandelt ist, und das Stück von Daten in dem zweiten Format auf einem Ausgabemedium zum Erzeugen einer Ausgabe (20) aufzeichnet;
eine Liefervorrichtung, die die erzeugte Ausgabe zu einem Ort liefert, der durch jedes Stück der Kundenidentifikationsinformation definiert ist; und
eine Speichervorrichtung (30) zum Speichern einer erzeugten Ausgabe in Verknüpfung mit der Kundeninformation, worin die Speichervorrichtung (30) jeden der Kunden (11a-11d) auf der Grundlage der Kundeninformation authentifiziert und nach Bestätigung der Authentifizierung eines jeden der Kunden (11a-11d) eine gespeicherte Ausgabe in Verknüpfung mit der Kundeninformation an jeden der Kunden (11a-11d) bereitstellt;
worin
mindestens die Ausgabeerzeugungsvorrichtung (19) und die Speichervorrichtung (83) in einem Paar in jedem der Mehrzahl von Orten eingebaut ist;
jedes Stück einer E-Mail, die von jedem der Kunden (11a-11d) empfangen ist, Information über einen Ausgabebereitstellungsort enthält, die von jedem der Kunden (11a-11d) bezeichnet ist; und
der Datenanalysator die Information über den Ausgabebereitstellungsort empfängt und die Bilddaten zu der Ausgabeerzeugungsvorrichtung (19) überträgt, die in einem bezeichneten Bereitstellungsort eingebaut ist, wobei die Ausgabeerzeugungsvorrichtung (19) an dem bezeichneten Bereitstellungsort die angeforderte Ausgabe erzeugt und die in dem bezeichneten Bereitstellungsort eingebaute Speichervorrichtung (30) die erzeugte Ausgabe speichert.

9. Verfahren zum Bereitstellen einer fühlbaren Ausgabe als Antwort auf jede Anforderung von Kunden (11a-11d), wobei das Verfahren die Schritte aufweist:
Empfangen durch drahtlose Kommunikation von Ausgabeerzeugungsdaten, die in einer Ausgabe (20) zu enthalten sind, in einem ersten Format, und von Kundeninformation, die Information über einen Ausgabebereitstellungsort enthält, die von jedem der Kunden (11a-11d) bezeichnet ist;
sequentielles Speichern von Sätzen von Ausgabeerzeugungsdaten, der Kundeninformation und des Ausgabebereitstellungsortes, wobei jeder Satz ein Stück von Ausgabeerzeugungsdaten, ein Stück von Kundeninformation und den Ausgabebereitstellungsort enthält;
Analysieren eines jeden Stückes der Ausgabeerzeugungsdaten in dem ersten Format und Umwandeln in ein Stück von Daten in einem zweiten Format;
Empfangen des Stückes von Daten in dem zweiten Format und Aufzeichnen des Stückes in dem zweiten Format auf einem Ausgabemedium zum Erzeugen einer Ausgabe;
Liefern der erzeugten Ausgabe zu dem Ort, der durch das Stück der Kundeninformation definiert ist;
Benachrichtigen eines jeden der Kunden (11a-11d) des Fertigstellens des Erzeugens der angeforderten Ausgabe; und
Speichern der erzeugten Ausgabe in Verknüpfung mit der Kundeninformation, Authentifizieren eines jeden der Kunden (11a-11d) auf der Grundlage der Kundeninformation und nach Bestätigung der Authentifizierung eines jeden der Kunden (11a-11d), Bereitstellen einer gespeicherten Ausgabe in Verknüpfung mit der Kundeninformation an jeden der Kunden (11a-11d);
worin die Ausgabe an einem Ort erzeugt wird, an dem die erzeugte Ausgabe gespeichert wird.

## Revendications

1. Système fournissant une sortie destinée à fournir une sortie tangible (20) en réponse à chaque requête en provenance de clients (11a-11d), le système comprenant :
un récepteur de courrier électronique (e-mail) (18) qui peut recevoir des e-mails en provenance des clients (11a-11d), par communication sans fil, chaque e-mail contenant des données à intégrer dans une sortie demandée (20) avec des informations de client ;
un dispositif de renvoi d'e-mail (18) qui renvoie, à réception de chaque e-mail par le récepteur d'e-mail (18), un e-mail pour accuser réception de chaque requête à chacun des clients (11a-11d), en fonction des informations de client ;
un analyseur de données (18) qui analyse le contenu de chaque e-mail reçu par le récepteur d'e-mail (18) et convertit les données sur la sortie demandée en données d'image à émettre sur un support de sortie ;
un dispositif de production de sortie (19) qui reçoit les données d'image et émet une image sur le support de sortie ;
un émetteur d'e-mail qui émet un e-mail pour notifier chacun des clients (11a-11d) de l'achèvement de la production de la sortie demandée (20) par le dispositif de production de sortie (19) ; et
un dispositif de stockage (30) destiné à stocker une sortie produite en association avec les informations de client, dans lequel le dispositif de stockage (30) authentifie chacun des clients (11a-11d) en fonction des informations de client et, lors de la confirmation ou de l'authenticité de chacun des clients (11a-11d), fournit une sortie stockée associée avec les informations de client à chacun des clients (11a-11d) ;
dans lequel
au moins le dispositif de production de sortie (19) et le dispositif de stockage (30) sont installés dans une paire dans chacun d'une pluralité d'emplacements ;
chaque e-mail reçu en provenance de chacun des clients (11a-11d) contient des informations à propos d'un emplacement de fourniture de sortie désigné par chacun des clients (11a-11d) ;
et l'analyseur de données (18) reçoit les informations à propos de la sortie fournissant l'emplacement et transfère les données d'image vers le dispositif de production de sortie (19) installé dans un emplacement de fourniture désigné, le dispositif de production de sortie (19) au niveau de l'emplacement de fourniture désigné produisant la sortie requise (20), et le dispositif de stockage (30) installé dans l'emplacement de fourniture désigné stockant la sortie produite (20).

2. Système fournissant une sortie selon la revendication 1, dans lequel les informations de client sont une adresse e-mail d'un client.

3. Système fournissant une sortie selon la revendication 1, dans lequel les e-mails reçus en provenance des clients (11a-11d) sont émis par des téléphones cellulaires (12a-12d), et les informations de client sont un numéro de téléphone affecté à chacun des téléphones cellulaires (12a-12d).

4. Système fournissant une sortie selon l'une quelconque des revendications 1 à 3,
dans lequel le récepteur d'e-mail (18) reçoit les e-mails en provenance des clients (11a-11d) à l'aide d'une technique de communication de données sans fil de courte portée.

5. Système fournissant une sortie selon la revendication 1, dans lequel le système fournissant une sortie est installé dans un lieu de divertissement comprenant une pluralité de pavillons, et le récepteur d'e-mails (18) est installé dans chacun de la pluralité de pavillons et est autorisé à recevoir uniquement des e-mails émis en provenance des clients (11a-11d) dans chacun de la pluralité de pavillons, ou
comprenant une pluralité de pavillons et au moins le dispositif de production de sortie (19) et le dispositif de stockage (30) sont installés dans une paire dans chacun de la pluralité de pavillons, ou
comprenant une pluralité de portes et au moins le dispositif de production de sortie (19) et le dispositif de stockage (30) sont installés dans une paire dans chacun de la pluralité de portes.

6. Système fournissant une sortie selon l'une quelconque des revendications 1 à 5, comprenant en outre un calculateur de temps estimé qui détecte, lors de la réception de chaque e-mail en provenance de chacun des clients (11a-11d) par le récepteur d'e-mail (18), un certain nombre d'e-mails déjà reçus et des conditions d'opération du dispositif de production de sortie (19) et, en fonction des résultats de détection, calcule un temps estimé d'achèvement de la sortie requise, dans lequel le dispositif de renvoi d'e-mail (18) renvoie l'e-mail comprenant en outre le temps estimé d'achèvement à chacun des clients (11a-11d).

7. Système fournissant une sortie selon l'une quelconque des revendications 1 à 6, dans lequel le dispositif de production de sortie (19) peut produire un timbre (20) comme sortie tangible.

8. Système fournissant une sortie destiné à fournir une sortie tangible (20) en réponse à chaque requête provenant de clients (11a-11d), le système comprenant :
un récepteur de données (18) qui peut recevoir, par communication sans fil, des données de production de sortie à intégrer dans une sortie (20) dans un premier format et des informations d'identifiant de client ;
une mémoire (83) qui peut stocker des ensembles des données de production de sortie et des informations d'identifiant de client, chaque ensemble comprenant une donnée de production de sortie et une information d'identifiant de client ;
un analyseur de données (18) qui analyse chaque donnée de production de sortie dans le premier format et la convertit en donnée dans un deuxième format ;
un dispositif de production de sortie (19) qui reçoit la donnée dans le deuxième format convertie par l'analyseur de données (18) et enregistre la donnée dans le deuxième format sur un support de sortie pour produire une sortie (20) ;
un dispositif de remise qui remet la sortie produite à un emplacement défini par chaque information d'identifiant de client ; et
un dispositif de stockage (30) destiné à stocker une sortie produite en association avec les informations de client, dans lequel le dispositif de stockage (30) authentifie chacun des clients (11a-11d) en fonction des informations de client et, lors de la confirmation de l'authenticité de chacun des clients (11a-11d), fournit une sortie stockée associée avec les informations de client à chacun des clients (11a-11d) ;
dans lequel
au moins le dispositif de production de sortie (19) et le dispositif de stockage (83) sont installés dans une paire dans chacun d'une pluralité d'emplacements ;
chaque e-mail reçu en provenance de chacun des clients (11a-11d) contient des informations à propos d'une sortie fournissant un emplacement désigné par chacun des clients (11a-11d) ; et
l'analyseur de données (18) reçoit les informations à propos de la sortie fournissant l'emplacement et transfère les données d'image vers le dispositif de production de sortie (19) installé dans un emplacement de fourniture désigné, le dispositif de production de sortie (19) au niveau de l'emplacement de fourniture désignée produisant la sortie requise, et le dispositif de stockage (30) installé dans l'emplacement de fourniture désigné stockant la sortie produite.

9. Procédé destiné à fournir une sortie tangible en réponse à chaque requête en provenance de clients (11a-11d), le procédé comprenant les étapes consistant à :
recevoir, par communication sans fil, des données de production de sortie à intégrer dans une sortie (20) dans un premier format et des informations de client, comprenant des informations à propos d'une sortie fournissant un emplacement désigné par chacun des clients (11a-11d) ;
stocker de manière séquentielle des ensembles des données de production de sortie, des informations de client, et l'emplacement de fourniture de sortie, chaque ensemble comprenant une donnée de production de sortie, une information de client, et l'emplacement de fourniture de sortie ;
analyser chacune des données de production de sortie dans le premier format et la convertir en une donnée dans un deuxième format ;
recevoir la donnée dans le deuxième format et enregistrer la donnée dans le deuxième format sur un support de sortie pour produire une sortie ;
remettre la sortie produite à l'emplacement défini par chaque information de client ;
notifier chacun des clients (11a-11d) de l'achèvement de la production de la sortie requise ; et
stocker une sortie produite en association avec les informations de client, authentifier chacun des clients (11a-11d) en fonction des informations de client, et lors de la confirmation de l'authenticité de chacun des clients (11a-11d), fournir une sortie stockée associée aux informations de client à chacun des clients (11a-11d) ;
dans lequel la sortie est produite à un emplacement au niveau duquel la sortie produite est stockée.
